# EUROPEAN PATENT APPLICATION

(11) **EP 1 589 768 A1**
(43) Date of publication of application: **26.10.2005**
(21) Application number: 04702796.6
(22) Date of filing: 16.01.2004
(51) Int. Cl.: H04N 7/32

(54) **IMAGE ENCODING METHOD**

(30) Priority: 20.01.2003 JP 2003010551
(71) Applicant: MATSUSHITA ELECTRIC INDUSTRIAL CO., LTD., Kadoma-shi, Osaka 571-8501 (JP)
(72) Inventor: NOTOYA, Youji, Neyagawa-shi, Osaka 572-0055 (JP); KADONO, Shinya, Nishinimiya-shi, Hyogo 662-0871 (JP)
(74) Representative: Eisenführ, Speiser & Partner
(86) International application number: PCT/JP2004/000275
(87) International publication number: WO 2004/066636

(57) **Abstract**

A picture coding method for generating a coded picture signal Str on which rapid random access can be performed while preventing a decrease in compression rate. The method includes: a first reference restriction step (Step S106) of restricting, in a target access unit to be processed (RAU), so that a post-entry picture refers to another picture except for the following pictures: a picture located before an entry picture in coding order, and a pre-entry picture; and a second reference restriction step (Step S114 or Step S116) of restricting, in the immediately following access unit (RAU), so that a pre-entry picture refers to another picture except for the following pictures: a picture located before an entry picture in the target access unit (RAU) in coding order, and a pre-entry picture in the target access unit (RAU).

## Description

### Technical Field

The present invention relates to a picture coding method for coding pictures.

### Background Art

Recently, with an arrival of the age of multimedia which handles integrally audio, video and pixel values, existing information media, i.e., newspaper, journal, TV, radio and telephone and other means through which information is conveyed to people, has come under the scope of multimedia.

In general, multimedia refers to a representation in which not only characters but also graphic symbols, audio, and especially, pictures and the like, are related to each other. However, in order to include the aforementioned existing information media in the scope of multimedia, it appears as a prerequisite to represent such information in digital form.

However, when estimating the amount of information contained in each of the aforementioned information media in digital form, the information amount per character requires 1-2 bytes whereas audio requires more than 64 Kbits per second (a telephone quality) and when it comes to a moving picture, it requires more than 100Mbits per second (a present television reception quality). Therefore, it is not realistic to handle the vast information directly in digital form via the information media mentioned above. For example, a videophone has already been put into practical use via Integrated Services Digital Network (ISDN) with a transmission rate of 64 Kbits/s to 1.5 Mbits/s, however, it is impossible to transmit a picture captured on the TV screen or shot by a TV camera.

This therefore requires information compression techniques, and for instance, in the case of a videophone, video compression techniques compliant with H.261 and H.263 standards internationally standardized by International Telecommunication Union-Telecommunication Standardization Sector (ITU-T) are employed. According to the information compression techniques compliant with MPEG-1 standard, picture information as well as audio information can be stored in an ordinary music Compact Disc (CD).

Here, the Moving Picture Experts Group (MPEG) is an international standard for a compression of moving picture signals and the MPEG-1 is a standard that compresses video signals down to 1.5 Mbits/s, namely, to compress the information included in TV signals approximately down to a hundredth. The quality targeted in the MPEG-1 standard was a medium one so as to realize a transmission rate primarily of about 1.5 Mbits/s, therefore, MPEG-2, standardized with the view to meet the requirements of even higher quality picture, realizes TV broadcast quality for transmitting a moving picture signal at a transmission rate of 2 to 15 Mbits/s.

In the present circumstances, a working group (ISO/IEC JTC1/SC29/WG11) previously in charge of the standardization of the MPEG-1/MPEG-2 has further standardized MPEG-4 which achieves a compression rate superior to the one achieved by the MPEG-1/MPEG-2, allows coding/decoding operations on a per-object basis and realizes a new function required by the age of multi media. At first, in the process of the standardization of the MPEG-4, the aim was to standardize a low bit rate coding, however, the aim is presently extended to a more versatile coding including a high bit rate coding for interlaced pictures and others. Moreover, a standardization of MPEG-4 AVC and ITU H.264, as a next generation coding method, is in process with a higher compression rate, jointly worked by the ITU-T and the ISO/IEC. The next generation coding method is published under the name of Committee Draft (CD) as of August 2002.

In coding of a moving picture, compression of information volume is usually performed by eliminating redundancy both in spatial and temporal directions. Therefore, inter-picture prediction coding, which aims at reducing the temporal redundancy, estimates a motion and generates a predictive picture on a block-by-block basis with reference to forward and backward pictures, and then codes a differential value between the obtained predictive picture and a current picture to be coded. Here, "picture" is a term to represent a single screen and it represents a frame when used for a progressive picture whereas it represents a frame or a field when used for an interlaced picture. The interlaced picture here is a picture in which a single frame consists of two fields, each having a different time. For coding and decoding an interlaced picture, three ways of processing a single frame are possible: as a frame; as two fields; and as a frame/field structure depending on a block in the frame.

A picture to which intra-picture prediction coding is performed without reference pictures is called "I-picture". A picture to which inter-picture prediction coding is performed with reference to a single picture is called "P-picture". A picture to which inter-picture prediction coding is performed by referring simultaneously to two pictures is called "B-picture". A B-picture can refer to two pictures, arbitrarily selected from the pictures whose display time is either forward or backward to that of a current picture to be coded, as an arbitrary combination. The reference pictures can be specified for each block which is a basic unit for coding and decoding, and they can be classified as follows: a first reference picture for a reference picture that is firstly described in the bit stream on which coding is performed; and a second reference picture for a picture that is described later. However, the reference pictures need to be already coded or decoded, which is a condition to code or decode these I, P and B pictures.

A motion compensation inter-picture prediction coding is employed for coding P-pictures or B-pictures. The motion compensation inter-picture prediction coding is a coding method in which motion compensation is applied to inter-picture prediction coding. The motion compensation is not a method to simply predict motions using pixels in the reference picture, but to estimate a motion (to be referred to as "motion vector" hereinafter) at each part within a picture so as to improve predictability by performing prediction that takes a motion vector into consideration, as well as to reduce the data amount. For example, the amount of data is reduced by estimating a motion vector for a current picture to be coded, and then, coding a prediction error between a predictive value indicating the amount equivalent to the motion vector that is shifted, and the current picture. In the case of using this method, information on motion vectors is required at the time of decoding, therefore, the motion vectors are coded and then recorded or transmitted.

The motion vector is estimated on a block-by-block basis. To be precise, the motion vector is estimated by fixing a block in the current picture, shifting a block in the reference picture within a range of search and finding out a location of the reference block that resembles a basic block.

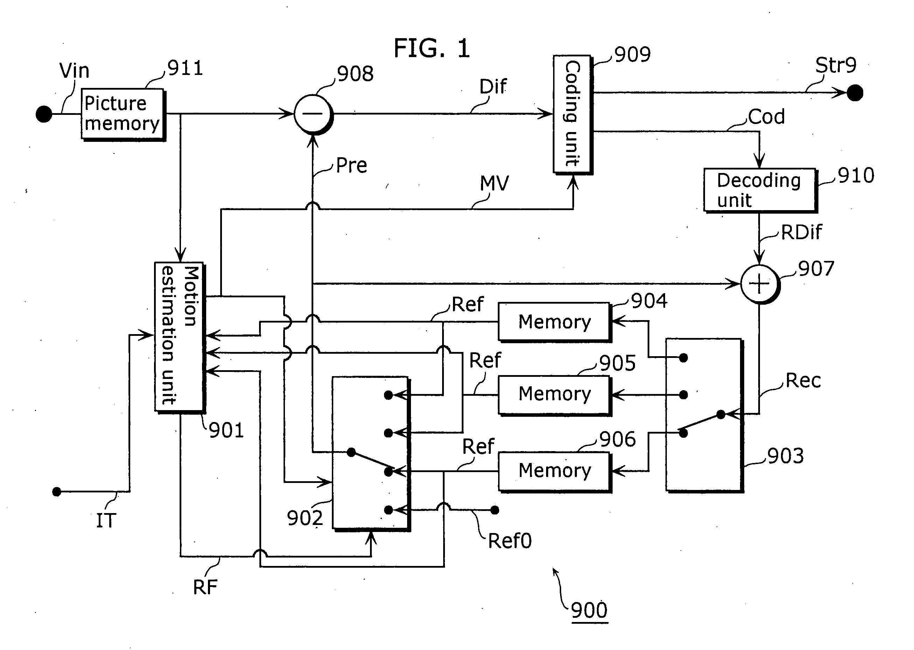

Fig. 1 is a block diagram showing a structure of the conventional picture coding apparatus.

The picture coding apparatus 900 codes a picture signal Vin on a picture-by-picture basis and outputs a coded picture signal Str9 that is a bit stream, and includes a motion estimation unit 901, a motion compensation unit 902, a selection unit 903, memories 904-906, an adder 907, a subtractor 908, a coding unit 909, a decoding unit 910 and a picture memory 911.

The picture memory 911 obtains a picture signal Vin, temporally stores it, rearranges the pictures included in the picture signal Vin in a coding order, and outputs the picture signal Vin, in which the pictures are rearranged, to the motion estimation unit 901 and the subtractor 908.

The subtractor 908 calculates a differential between the picture signal Vin and a predictive picture Pre, and outputs the result as a differential picture signal Dif to the coding unit 909.

The coding unit 909 codes the differential picture signal Dif outputted from the subtractor 908 and a motion vector MV outputted from the motion estimation unit 901. As a result, the coding unit 909 generates coded data Cod and a coded picture signal Str9 obtained by performing variable length coding on the coded data Cod, and outputs the coded data Cod and the coded picture signal Str9.

The decoding unit 910 decodes the coded data Cod and generates a decoded differential picture signal RDif.

The adder 907 adds the decoded differential picture signal RDif to the predictive picture Pre and generates a decoded picture signal Rec.

The selection unit 903 selects any of the memories 904-906 and outputs the decoded picture signal Rec to the memory so that the decoded picture signal Rec can be used as a reference picture for coding the subsequent pictures. For example, the selection unit 903 selects the memory storing the oldest decoded picture signal Rec, out of the memories 904-906.

Each memory 904-906 obtains the decoded picture signal Rec from the selection unit 903 and stores it as a candidate picture Ref that is to become a candidate for a reference picture. Each memory 904-906 also removes the oldest candidate picture Ref that has already been stored, when storing a new candidate picture Ref.

The motion estimation unit 901 selects a candidate picture Ref having an image area that resembles the picture signal Vin the most from among the candidate pictures Ref stored in the memories 904-906. The motion estimation unit 901 then estimates a motion vector MV indicating a location of the image area.

The motion estimation unit 901 further specifies the picture that resembles the one indicated in the picture signal Vin, that is, a picture that is appropriate as a reference picture, out of the plural candidate pictures Ref stored respectively in the memories 904-906, by using specification information RF for specifying the reference picture.

Here, when a correlation between pictures is lost because of a scene change or the like, coding with reference to reference pictures, in some cases, may cause a decrease in compression rate than intra-picture prediction coding. Thus, when the candidate picture Ref similar to the picture signal Vin is not found, the motion estimation unit 901 instructs, with the use of the specification information RF, the motion compensation unit 902 to perform intra-picture prediction coding.

In order to prevent a spread of errors and to realize a reproduction in the middle of the coded picture signal, it is necessary to perform, on a predetermined number of pictures basis, intra-picture prediction coding which enables a decoding that uses only the predetermined number of pictures. The motion estimation unit 901 instructs, with the use of the specification information RF, the motion compensation unit 902 to perform intra-picture prediction coding, in the case of obtaining an intra-picture instruction signal IT for instructing from outside that the intra-picture prediction coding should be performed.

The motion compensation unit 902 uses any of the following pictures as a reference picture, based on the specification signal RF outputted from the motion estimation unit 901: three candidate pictures Ref stored in the memories 904-906 and the candidate picture Ref0 having a value "0". Namely, in the case where the specification signal RF specifies the candidate picture Ref that resembles the picture signal Vin, the motion compensation unit 902 obtains the candidate picture Ref as a reference picture from the memory that stores the candidate picture Ref specified by the specification signal RF. In the case where the specification signal RF instructs the motion compensation unit 902 to perform intra-picture prediction coding, the motion compensation unit 902 obtains the candidate picture Ref having a value "0". When obtaining a candidate picture Ref as a reference picture, the motion compensation unit 902 extracts, using the motion vector MV, an image area that is the most suitable for a predictive picture Pre from the obtained reference picture, generates a predictive picture Pre based on the extracted image area, and outputs it. However, when obtaining a candidate picture Ref0, the motion compensation unit 902 generates a predictive picture Pre having a value "0" and outputs it.

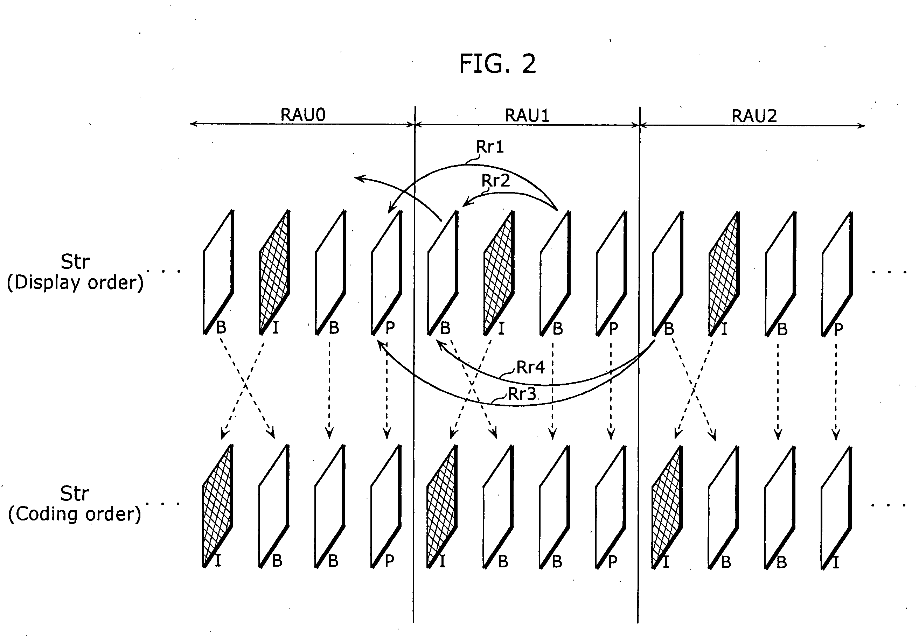

FIG. 2 is a diagram showing a structure of the coded picture signal Str9 outputted by the conventional picture coding apparatus 900.

The coded picture signal Str9 is made up of plural random access units (simply referred to as "access unit" hereinafter). In FIG. 2, a part of access unit RAU0 and access units RAU1, RAU2 are shown.

The access unit includes plural pictures including a special I-picture which can be decoded without dependence on other pictures. The other pictures included in the access unit can be a P-picture or a B-picture. That is to say that such access unit is considered as a single unit obtained by dividing, per I picture, the coded picture signal Str9 being made up of plural pictures.

As shown in FIG. 2, each of the pictures included in the coded picture signal Str9 is placed in an order in which each picture is coded, that is, in decoding order. An order of displaying each picture is different from such placement order.

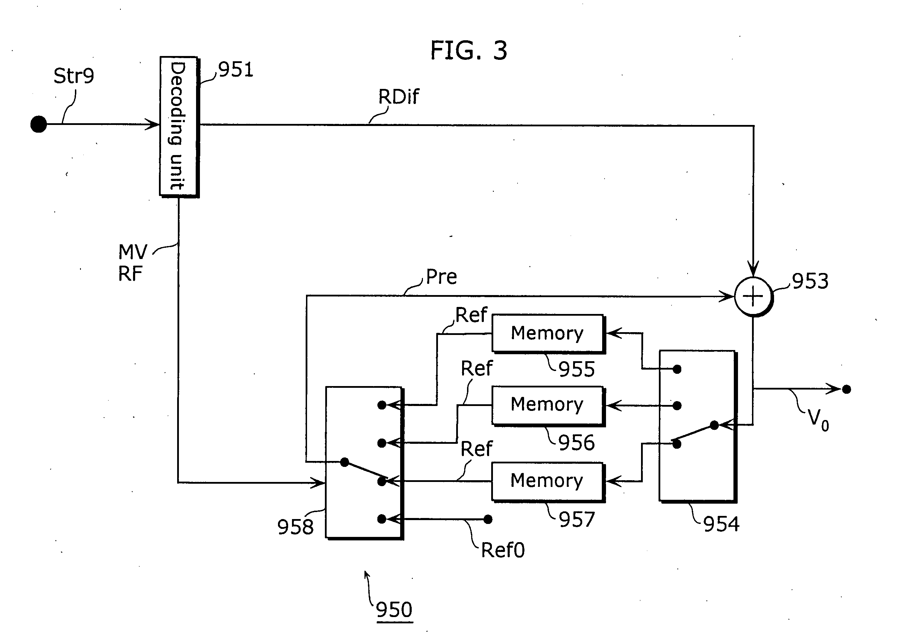

FIG. 3 is a block diagram showing a structure of the conventional picture decoding apparatus.

The picture decoding apparatus 950 decodes the coded picture signal Str9, and includes a coding unit 951, an adder 953, a selection unit 954, memories 955-957 and a motion compensation unit 958.

The decoding unit 951 decodes the coded picture signal Str9 and outputs the decoded differential picture signal RDif, the motion vector MV and the specification information RF.

The adder 953 adds the predictive picture Pre to the decoded differential picture signal RDif, and outputs a decoded picture signal Vo.

The selection unit 954 selects any of the memories 955-957 and outputs the decoded picture signal Vo to the memory so that the decoded picture signal Vo can be used as a reference picture for decoding the subsequent pictures. For example, the selection unit 954 selects the memory that stores the oldest decoded picture signal Vo out of the memories 955-957.

The motion compensation unit 958 uses any of the following pictures as a reference picture, based on the specification signal RF outputted from the decoding unit 951: three candidate pictures stored in the memories 955-957, a candidate picture Ref0 having a value "0". Namely, in the case where the specification signal RF specifies a candidate picture Ref that resembles the picture signal Vin, the motion compensation unit 958 obtains a candidate picture Ref as a reference picture from the memory that stores the candidate picture Ref specified by the specification signal RF. In the case where the specification signal RF instructs the motion compensation unit 958 to perform intra-picture prediction coding, the motion compensation unit 958 obtains the candidate picture Ref0 having a value "0". When obtaining a candidate picture Ref as a reference picture, the picture compensation unit 958 extracts, with the use of the motion vector MV, an image area that is the most suitable for a predictive picture Pre from the obtained reference picture, generates a predictive picture Pre using the extracted image area, and outputs it. When obtaining a candidate picture Ref0, the motion compensation unit 958 generates a predictive picture Pre having a value "0", and outputs it.

However, with the use of the conventional picture coding apparatus 900 as described above, the pictures included in a predetermined access unit and the one immediately following it may, for some cases, be coded with reference to the picture included in the access unit that is placed before the predetermined access unit. Therefore, the problem is that the picture decoding apparatus 950 cannot easily perform reproduction of pictures starting from the predetermined access unit (random access).

Namely, as shown in FIG. 2, when the picture included in the access unit RAU1 and RAU2 directly or indirectly refers to the picture in the random access unit RAU0 or in one of the previous access units RAU, random access cannot be performed easily and rapidly even when the picture decoding apparatus 950 obtains the coded picture signal Str9 from the picture coding apparatus 900 and attempts to start performing random access on the coded picture signal Str9 from the access unit RAU1. This is because the picture in the access unit RAU0 or in one of the previous access units RAU has to be decoded although it is not displayed.

More precisely, it is difficult to perform random access starting from the access unit RAU1 that is a target access unit, when the following reference relationships Rr1, Rr2, Rr3 and Rr4 are established. To make the description easy to understand, an I-picture to which intra-picture prediction coding is performed is called an entry picture, a B-picture or a P-picture which is located before the entry picture in display order is called a pre-entry picture and a B-picture or a P-picture which is located after the entry picture in display order is called a post-entry picture, in each access unit.

### (1) Reference relationship Rr1

A reference relationship Rr1 is a relationship built in a target access unit, in which a post-entry picture is coded with reference to a picture located before an entry picture in coding order. For example, as shown in FIG. 2, it is a relationship in which a B-picture that is located after, in display order, an I-picture included in a target access unit RAU1 is coded with reference to a picture in the access unit RAU0.

### (2) Reference relationship Rr2

A reference relationship Rr2 is a relationship built in a target access unit, in which a post-entry picture is coded with reference to a pre-entry picture, and also, the pre-entry picture is coded with reference to a picture located before an entry picture in coding order. For example, as shown in FIG. 2, it is a relationship in which a B-picture that is located after, in display order, the I-picture included in the access unit RAU1 is coded with reference to a B-picture located before the I-picture in display order, and the B-picture located before the I-picture in display order is coded with reference to a picture in the access unit RAU0.

### (3) Reference relationship Rr3

A reference relationship Rr3 is a relationship built in an access unit immediately following the target access unit, in which a pre-entry picture is coded with reference to a picture located before an entry picture in the target access unit in coding order. For example, as shown in FIG. 2, it is a relation in which a B-picture that is located before, in display order, an I-picture included in the access unit RAU2 is coded with reference to a picture in the access unit RAU0 that is located before, in coding order, the I-picture in the target access unit RAU1.

### (4) Reference relationship Rr4

A reference relationship Rr4 is a relationship built in an access unit immediately following the target access unit, in which a pre-entry picture is coded with reference to a pre-entry picture in the target access unit, and also, the pre-entry picture in the target access unit is coded with reference to a picture located before an entry picture in coding order. For example, as shown in FIG. 2, it is a relation in which a B-picture located before, in display order, an I-picture included in the access unit RAU2 is coded with reference to a B-picture located before, in display order, the I-picture in the target access unit RAU1, and the B-picture located before the I picture in display order is coded with reference to a picture in the access unit RAU0.

By the way, according to a different picture coding method, when a picture included in a predetermined access unit is coded, the picture is coded independently from a picture included in another access unit.

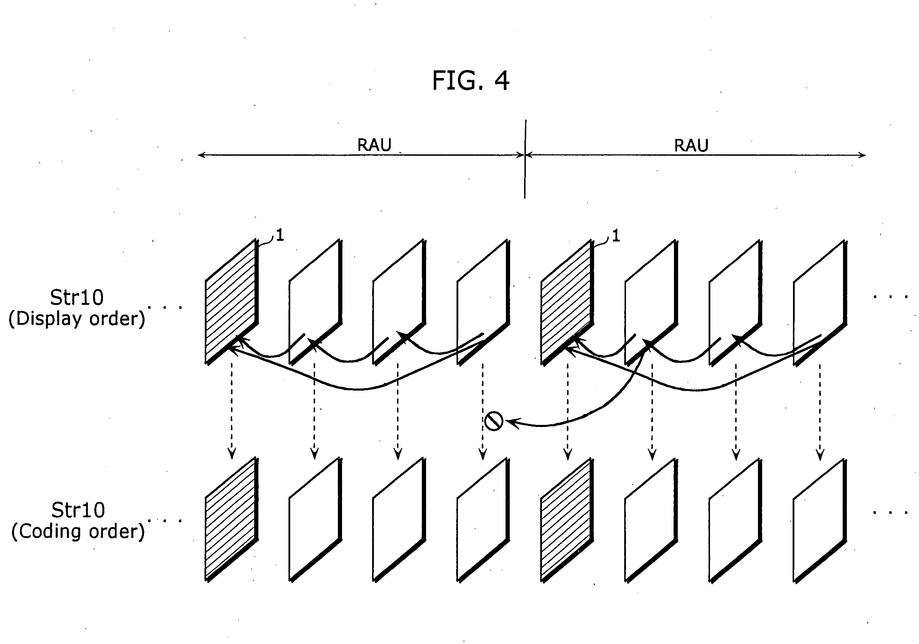

FIG. 4 is a structural diagram showing a structure of the coded picture signal generated using the different picture coding method mentioned above.

A coded picture signal Str10 is made up of plural access units RAU, each of which has a special picture IDR1 at the head. The IDR1 is an intra-picture prediction coded picture, and the pictures located after the IDR1 are coded with reference to other pictures but not the pictures located before the IDR1.

Namely, the coded picture signal Str10, in which such IDR1 as described above is placed, has independent access units RAU, therefore the picture decoding apparatus can properly perform random access on the coded picture signal Str10, starting from any access unit RAU. However, a problem is that the compression rate can be decreased in using the picture coding method for generating such coded picture signal Str10 since all the reference relationships of pictures as such that cross over the access unit RAU are prohibited.

The same problem as can be seen in the picture coding method for generating the coded picture signal Str10 described above may occur in another picture coding method (MPEG-2).

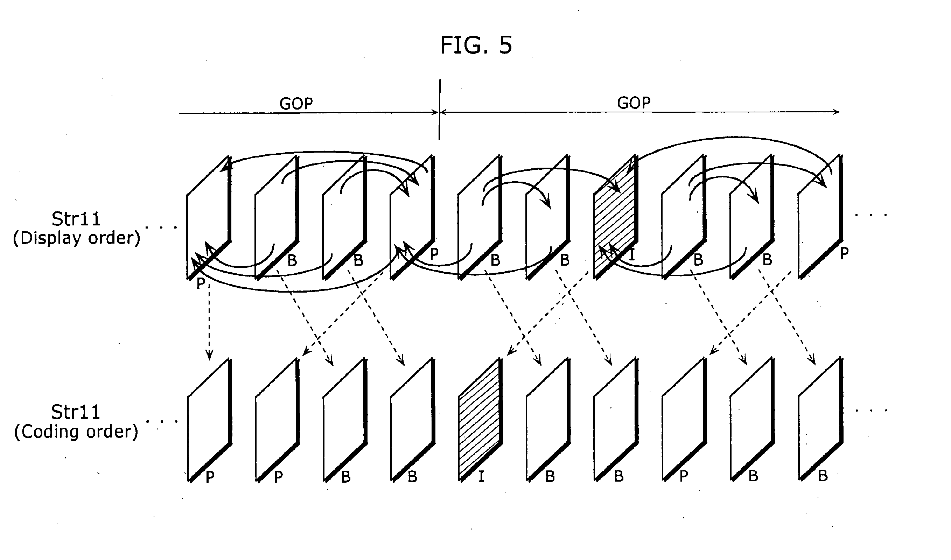

FIG. 5 is a structural diagram showing a structure of the coded picture signal generated using the picture coding method according to the MPEG-2.

The coded picture signal Str 11 is made up of plural group of pictures GOP, and each group of picture GOP is made up of plural pictures. A picture included in each group of picture GOP is an I-picture, a P-picture or a B-picture.

In the picture coding method according to the MPEG-2, a P-picture is coded with reference to a single picture, that is, an I-picture or a P-picture that immediately precedes the P-picture in display order, whereas a B-picture is coded with reference to two pictures: an I-picture or a P-picture that immediately precedes the P-picture, and an I-picture or a P-picture that immediately follows the P-picture.

Namely, the reference pictures are limited to a relatively narrow range in a coded picture signal Str11 in which the P-picture and the B-picture as described above are placed. The picture decoding apparatus can therefore perform random access rapidly on the coded picture signal Str11 starting from any group of picture GOP, when the display starts from an I-picture. However, it is a problem that, by using the picture coding method for generating such coded picture signal Str11, the compression rate of the coded picture signal is reduced due to the narrow range of the reference relationship of pictures.

### Disclosure of Invention

The present invention is conceived in view of the above problems, and an object of the present invention is to provide a picture coding method for generating a coded picture signal that enables a prompt random access while preventing a decrease in compression rate.

In order to achieve the above object, a picture coding method of coding a plurality of pictures included in a picture signal for generating a coded picture signal in the following manner: coding each of predetermined pictures as an entry picture without reference to another picture; and coding each of the pictures other than the entry pictures with reference to another coded picture, wherein the picture signal is processed per access unit which is made up of a plurality of pictures including the entry picture, and the method comprises: a first reference restriction step of restricting, in a target access unit to be processed, so that a post-entry picture located after the entry picture in display order refers to another picture except for the following pictures: a picture located before the entry picture in coding order; and a pre-entry picture which is located before the entry picture in display order and refers to a picture located before the entry picture in coding order; and a second reference restriction step of restricting, in an access unit immediately following the target access unit, so that a pre-entry picture located before the entry picture in display order refers to another picture except for the following pictures: a picture located before the entry picture in the target access unit in coding order; and a pre-entry picture in the target access unit, which refers to a picture located before the entry picture in the first access unit in coding order.

Thus, the post-entry picture in the target access unit is coded independently from the picture located before the entry picture in coding order, namely, the access unit preceding the target access unit whereas the pre-entry picture in the access unit immediately following the target access unit is coded independently from the picture located before the entry picture in the target access unit, namely, the access unit preceding the target access unit. The picture decoding apparatus, having obtained the signal thus coded, therefore, can perform random access on the coded signal rapidly starting from the target access unit, without decoding the picture included in the access unit preceding the target access unit. The decrease in the compression rate in coding the picture signal Vin can be prevented for the following reasons: the pre-entry picture in the target access unit may refer to a picture located before the entry picture in coding order, that is, a picture included in the access unit preceding the target access unit; a reference relationship that crosses over the access unit is not prohibited by placing the IDR1 as described in the Background Art; and a reference picture is not restricted to the picture immediately before or after the target picture.

In the first reference restriction step, another picture is used for reference except for the following pictures: a picture located before the entry picture in coding order; and a pre-entry picture located before the entry picture in display order, and in the second reference restriction step, another picture is used for reference except for the following pictures: a picture located before the entry picture in the target access unit in coding order; and a pre-entry picture in the target access unit.

Thus, in the first restriction step, the pre-entry picture is excluded from the candidate reference pictures regardless of whether the pre-entry picture refers to the picture located before the entry picture in coding order. In the second reference restriction step, the pre-entry picture is excluded from the candidate reference pictures regardless of whether the pre-entry picture refers to the picture located before the entry picture in the target access unit. The coding processing can be operated easily and rapidly.

The picture coding method further comprises: a reference structure information coding step of coding reference structure information indicating an access unit processed as a target access unit for which the first and second reference restriction steps have been executed; and an insertion step of inserting the coded reference structure information into the coded picture signal.

Thus, the coded picture signal includes reference structure information indicating an access unit processed as a target access unit for which the first and second reference restriction steps have been executed. The picture decoding apparatus, having obtained such coded picture signal, can identify easily the access unit from which rapid random access can be performed, based on the reference structure information.

The picture coding method further comprises: a reference structure information coding step of coding, per access unit, each reference structure information indicating whether or not the first and second reference restriction steps have been executed for each access unit processed as a target access unit; and an insertion step of inserting each reference structure information corresponding to each access unit into said each access unit included in the coded picture signal.

Thus, the coded picture signal includes the reference structure information indicating whether or not the first and second reference restriction steps have been executed in each access unit. Therefore, the picture decoding apparatus, having obtained such coded picture signal, can determine whether or not rapid random access can be performed starting from each access unit, based on the reference structure information.

Here, the picture coding method further comprises: a reference structure information coding step of coding, per access unit, each reference structure information indicating a range of reference for each picture included in each access unit; and an insertion step of inserting each reference structure information corresponding to each access unit into said each access unit included in the coded picture signal.

Thus, the coded picture signal includes the reference structure information indicating a range of reference for each access unit. The picture decoding apparatus, having obtained such coded picture signal, can determine for each access unit whether or not rapid random access can be performed starting from said each access unit.

The present invention can be realized also as a picture coding apparatus or a program using the picture coding method as described above, as a storage medium storing the program, and as a coded picture signal generated using the picture coding method.

### Brief Description of Drawings

FIG. 1 is a block diagram showing a structure of the conventional picture coding apparatus.
FIG. 2 is a structural diagram showing a structure of the stream outputted by the conventional picture coding apparatus.
FIG. 3 is a block diagram showing a structure of the conventional picture decoding apparatus.
FIG. 4 is a structural diagram showing a structure of the picture coded signal generated by using another picture coding method.
FIG. 5 is a structural diagram showing a structure of the coded picture signal generated by using a picture coding method according to the MPEG-2.
FIG. 6 is a block diagram showing a structure of the picture coding apparatus according to a first embodiment of the present invention.
FIG. 7 is an illustration for explaining a reference relationship of pictures limited by an estimation unit according to the first embodiment of the present invention.
FIG. 8 is a flowchart schematically showing a sequence of operations performed by the estimation unit according to the first embodiment of the present invention.
FIG. 9 is a flowchart showing a detailed operation in Step S106 described in FIG. 8, performed by the estimation unit according to the first embodiment of the present invention.
FIG. 10 is a flowchart showing a detailed operation in Step S116 described in FIG. 8, performed by the estimation unit according to the first embodiment of the present invention.
FIG. 11 is a flowchart showing a detailed operation in Step S114 described in FIG. 8, performed by the estimation unit according to the first embodiment of the present invention.
FIG. 12 is a structural diagram showing a structure of the coded picture signal outputted by the picture coding apparatus according to the first embodiment of the present invention.
FIG. 13 is a structural diagram showing a structure of the coded picture signal according to the variation 1 illustrated in the first embodiment of the present invention.
FIG. 14 is a flowchart showing an operation performed by the picture coding apparatus for generating the coded picture signal according to the variation 1 illustrated in the first embodiment of the present invention.
FIG. 15 is a flowchart for explaining an operation performed by the picture coding apparatus for generating another coded picture signal according to the variation 1 illustrated in the first embodiment of the present invention.
FIG. 16 is information contents display diagram showing contents included in reference structure information according to a variation 2 illustrated in the first embodiment of the present invention.
FIG. 17 is a structural diagram showing a structure of the coded picture signal including the reference structure information according to the variation 2 illustrated in the first embodiment of the present invention.
FIG. 18 is a structural diagram for explaining how the reference structure information according to the variation 2 illustrated in the first embodiment indicates a range of reference for each of the pictures included in an access unit to which the reference structure information belongs, and a range of reference for a picture included in another access unit.
FIG. 19 is a structural diagram showing a structure of the media data recorded in a recording medium, according to a variation 3 illustrated in the first embodiment of the present invention.
FIG. 20 is a structural diagram showing a correlation between a coded picture signal and a reference table, according to a variation 4 illustrated in the first embodiment of the present invention.
FIG. 21 is a structural diagram showing a structure of the coded picture signal that includes reference specification information according to a variation 5 illustrated in the first embodiment of the present invention.
FIG. 22 is a structural diagram showing a structure of the identification table according to a variation 6 illustrated in the first embodiment of the present invention.
FIG. 23 is a block diagram showing a structure of the picture decoding apparatus according to a second embodiment of the present invention.
FIG. 24 is a flowchart showing schematically an operation performed by the picture decoding apparatus according to the second embodiment of the present invention.
FIG. 25 is a flowchart showing an operation for decoding the coded picture signal that includes point information and a parameter set, performed by the picture decoding apparatus according to the second embodiment of the present invention.
FIG. 26 is a flowchart showing an operation performed by the decision unit in the picture decoding apparatus according to a variation 1 illustrated in the second embodiment of the present invention.
FIG. 27 is a flowchart showing an operation performed by the decision unit in the picture coding apparatus according to a variation 2 illustrated in the second embodiment of the present invention.
FIG. 28 is a block diagram showing a structure of the picture decoding apparatus according to a variation 3 illustrated in the second embodiment of the present invention.
FIGS. 29A, 29B and 29C are illustrations of a recording medium, according to a third embodiment of the present invention, for recording a program for realizing, in a computer system, the picture coding method according to the first embodiment.
FIG. 30 is a block diagram showing a whole configuration of the content supply system for providing content delivery services, according to a fourth embodiment of the present invention.
FIG. 31 is a sketch showing a cell phone, according to the fourth embodiment of the present invention, which uses the picture coding method and the picture decoding method according to the first embodiment.
FIG. 32 is a block diagram showing an internal structure of the cell phone according to the fourth embodiment of the present invention.
FIG. 33 is a structural diagram showing a structure of a digital broadcasting system according to the fourth embodiment of the present invention.

### Best Mode for Carrying Out the Invention

The following describes the embodiments with reference to the diagrams.

### (First Embodiment)

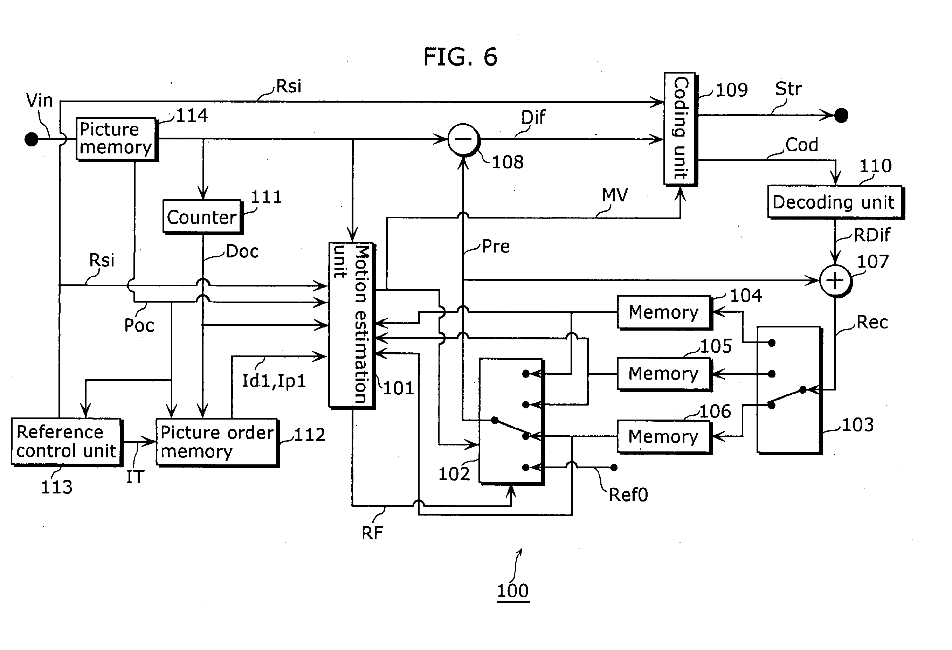

FIG. 6 is a block diagram showing a structure of the picture coding apparatus according to the first embodiment of the present invention.

A picture coding apparatus 100 according to the present embodiment codes a picture signal Vin on a picture-by-picture basis and generates a coded picture signal Str which enables a prompt random access while preventing a decrease in compression rate.

The picture coding apparatus 100 as such is comprised of a motion estimation unit 101, a motion compensation unit 102, a selection unit 103, memories 104-106, an adder 107, a subtractor 108, a coding unit 109, a decoding unit 110, a counter 111, a picture order memory 112, a reference control unit 113 and a picture memory 114.

The picture memory 114 obtains the picture signal Vin, stores it temporally, rearranges the pictures included in the picture signal Vin in coding order and outputs the picture signal Vin, in which the pictures are rearranged, to the motion estimation unit 101, the subtractor 108 and the counter 111. The picture memory 114 also outputs display order information Poc indicating a display order of the pictures included in the picture signal Vin, to the motion estimation unit 101, the picture order memory 112 and the reference control unit 113.

The subtractor 108 calculates a difference between the picture signal Vin and the predictive picture Pre, and outputs the result to the coding unit 109 as a differential picture signal Dif.

The coding unit 109 codes the differential picture signal Dif outputted from the subtractor 108, a motion vector MV outputted from the motion estimation unit 101 and reference structure information Rsi outputted from the reference control unit 113. Consequently, the coding unit 109 generates coded data Cod as well as a coded picture signal Str obtained by performing variable length coding or the like on the coded data Cod, and outputs the coded data Cod and the coded picture signal Str.

The decoding unit 110 decodes the coded data Cod and generates a decoded differential picture signal RDif.

The adder 107 adds the decoded differential picture signal RDif to the predictive picture Pre, and generates a decoded picture signal Rec.

The selection unit 103 selects any one of the memories 104-106 and outputs the decoded picture signal Rec to the memory so that the decoded picture signal Rec can be used as a reference picture for coding the subsequent pictures. For example, the selection unit 103 selects the memory storing the oldest decoded picture signal Rec from among the memories 104-106.

Each memory 104-106 obtains the decoded picture signal Rec from the selection unit 103, and stores it as a candidate picture Ref which is to be a candidate for a reference picture. Each memory 104-106 also removes the oldest candidate picture Ref that has already been stored, when storing a new candidate picture Ref.

The reference control unit 113 obtains the display order information Poc from the picture memory 114, and generates reference structure information Rsi indicating the access unit to be processed as the access unit from which a prompt random access can be started out of the access units included in the picture signal Vin, based on the obtained display order information Poc. The reference control unit 113 then outputs the generated reference structure information Rsi to the motion estimation unit 101 and the coding unit 109. Here, the reference structure information Rsi indicates the access unit in the coded picture signal Str, from which random access can be promptly performed after being coded and inserted in the coded picture signal Str.

The reference control unit 113 periodically outputs intra-picture instruction signal IT for instructing the picture order memory 112 to perform intra-picture prediction coding.

The counter 111 obtains the picture signal Vin from the picture memory 114, and outputs, to the picture order memory 112 and the motion estimation unit 101, coding order information Doc indicating a coding order of each of the pictures included in the picture signal Vin by counting each picture.

The picture order memory 112 obtains sequentially the coding order information Doc of each picture from the counter 111, and also obtains sequentially the display order information Poc for each picture from the picture memory 114. The picture order memory 112, obtaining the intra-picture instruction signal IT from the reference control unit 113, specifies the coding order and the display order of the pictures indicated in the intra-picture instruction signal IT, based on the coding order information Doc and the display order information Poc, and stores the specified coding order as specification coding order information Id1 as well as the specified display order information as specification display order information Ip1.

That is to say that the picture order memory 112 stores the coding order and the display order of the I-picture which is intra-picture coded, respectively as specification coding order information Id1 and specification display order information Ip1.

The picture order memory 112 as described above also stores the specified coding order information Id1 and the specified display order information Ip1 of two I-pictures, using a First-In First-Out method. That is to say, the picture order memory 112 stores the specification coding order information Id1 and the identification display order information Ip1 respectively for a new I-picture and an I-picture immediately preceding the new I-picture.

The picture order memory 112 then outputs, to the motion estimation unit 101, the specification coding order information Id1 and the specification display order information Ip1 for the two I-pictures.

The motion estimation unit 101 selects a picture having an image area similar to the one indicated in the picture signal Vin, as a reference picture, out of the candidate pictures Ref stored in the memories 104-106. The motion estimation unit 101 then estimates a motion vector MV indicating a location of the image area.

The motion estimation unit 101 further specifies a picture that resembles the one indicated in the picture signal Vin, that is, a picture that is appropriate as a reference picture, out of multiple reference pictures Ref stored respectively in the memories 104-106, by using specification information RF for specifying the reference picture.

The motion compensation unit 102 uses one of the following as a reference picture: three candidate pictures Ref stored in the memories 104-106 and a candidate picture Ref0 having a value "0". Namely, in the case where the specification signal RF specifies a candidate picture Ref similar to the one indicated in the picture signal Vin, the motion compensation unit 102 obtains a candidate picture Ref as a reference picture from the memory that stores the candidate picture Ref specified in the specification signal RF. In the case where the specification signal RF instructs so that intra-picture prediction coding is performed, the motion compensation unit 102 obtains a candidate picture Ref0 having a value "0". When obtaining a candidate picture Ref as a reference picture, the motion compensation unit 102 extracts, using the motion vector MV, an image area that is the most suitable for a predictive picture Pre from the obtained reference picture, generates a predictive picture Pre based on the extracted image area, and outputs it. When obtaining a candidate picture Ref0, the motion compensation unit 102 generates a predictive picture Pre having a value "0", and outputs it.

Here, the motion estimation unit 101 according to the present embodiment limits the pictures referred to by a current picture to be coded, based on the reference structure information Rsi obtained from the reference control unit 113, the display order information Poc obtained from the picture memory 114, and the specification coding order information Id1 as well as the specification display order information Ip1 of the two I-pictures obtained from the picture order memory 112.

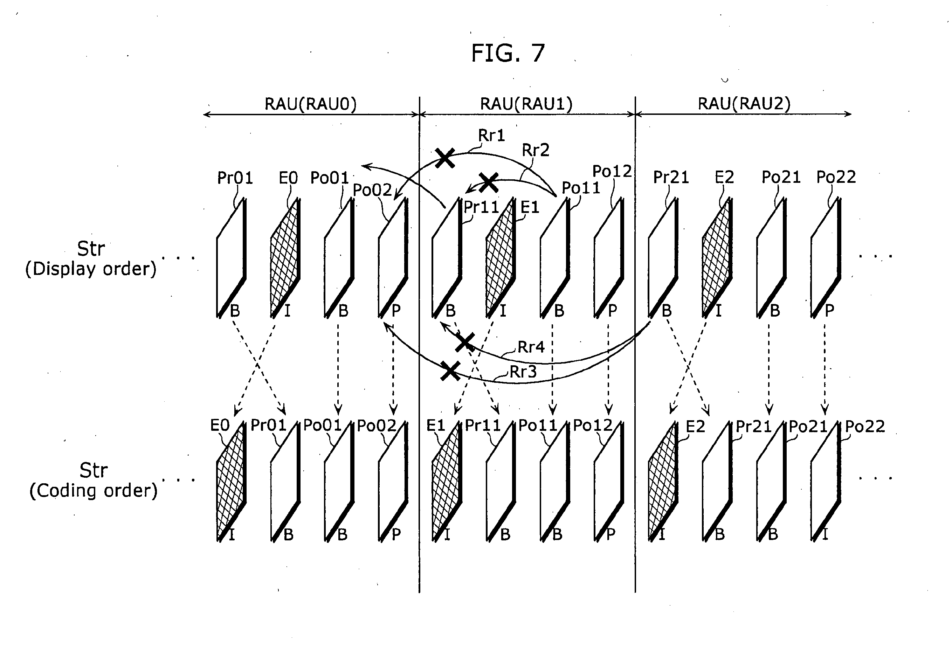

FIG. 7 is an illustration for explaining reference relationships of pictures which is limited by the motion estimation unit 101.

The motion estimation unit 101 prohibits the four reference relationships described above in the Background Art.

To be concrete, the motion estimation unit 101 judges that prompt random access should be made possible starting from an access unit RAU1, based on the reference structure information Rsi obtained from the reference control unit 113. That is to say, the motion estimation 101 judges that the access unit RAU1 is to be processed so that the prompt random access can be started. The motion estimation unit 101 then compares the coding order and the display order of an entry picture E1 in the access unit RAU1 which are specified based on the latest specification coding order information Id1 and the identification display order information Ip1 and those of a current picture to be coded in the access unit RAU1 which are specified based on the display order information Poc and the coding order information Doc.

Consequently, in the case where a current picture to be coded is either a post-entry picture Po11 or Po12, the motion estimation unit 101 does not select, as a reference picture, a picture located before the entry picture E1 in coding order, namely, a picture in the access unit RAU0, but selects another picture. In this way, the reference relationship Rr1 described in FIG. 7 is prohibited in the access unit RAU1.

In the case where the current picture is either the post-entry picture Po11 or Po12, the motion estimation unit 101 does not select, as a reference picture, a pre-picture Pr11 in the access unit RAU1 which refers to a picture located before the entry picture E1 in coding order, but selects another picture. In this way, the reference relationship Rr2 described in FIG. 7 is prohibited in the access unit RAU1.

Furthermore, the motion estimation unit 101 obtains an entry picture E2 in the access unit RAU2, the specification coding order information Id1 and the identification display order information Ip1 for the entry picture E2, and compares the display order and the coding order of the entry picture E2 which are specified based on the specification coding order information Id1 and the identification display information Ip1 and those of another current picture in the access unit RAU2 which are specified based on the display order information Poc and the coding order information Doc, after processing the entry picture E2 as a current picture.

Consequently, in the case where a current picture in the access unit RAU2 is a pre-entry picture Pr21, the motion estimation unit 101 does not select, as a reference picture, a picture located before the entry picture E1 in the access unit RAU1 in coding order, that is, a picture in the access unit RAU0 or in one of the previous access units RAU. In this way, the reference relationship Rr3 described in FIG. 7 is prohibited in the access unit RAU2.

In the case where a current picture in the access unit RAU2 is a pre-entry picture Pr21, the motion estimation unit 101 does not select, as a reference picture, the pre-entry picture Pr11 in the access unit RAU1 which refers to a picture located before the entry picture E1 in coding order, but selects another picture. In this way, the reference relationship Rr4 described in FIG. 7 is prohibited in the access unit RAU2.

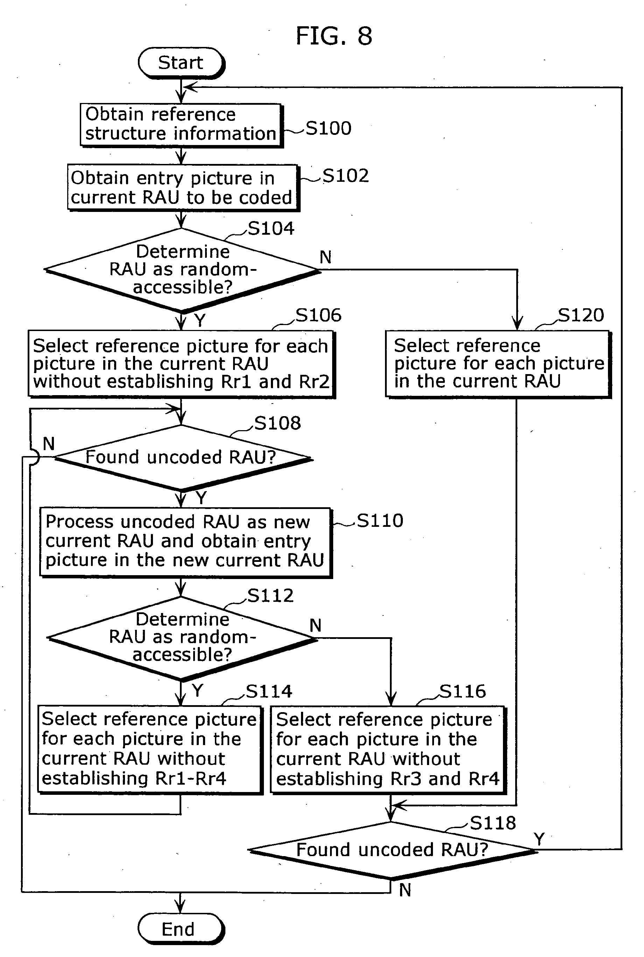

FIG. 8 is a flowchart showing schematically a sequence of operations performed by the motion estimation unit 101. It should be noted that an access unit is represented as RAU in FIG. 8.

The motion estimation unit 101 firstly obtains the reference structure information Rsi from the reference control unit 113, and grasps the access unit RAU from which prompt random access should be made possible (Step S100).

The motion estimation unit 101, obtaining an entry picture in a target access unit RAU to be coded, performs processing such as outputting the specification information RF for instructing that intra-picture coding should be performed on the entry picture (Step S102).

Here, the motion estimation unit 101 judges whether or not prompt random access can be performed starting from the target access unit RAU, based on the obtained reference structure information Rsi (Step S104). When judging that the random access should be made possible (Y in Step S104), the motion estimation unit 101 determines the target access unit RAU to be processed for random access, selects a reference picture without establishing the reference relationships Rr1 and Rr2 for each of the pictures in the access unit RAU, and performs estimation of a motion vector MV, or the like (Step S106).

The motion estimation unit 101 then judges whether or not an unprocessed access unit RAU is found (Step S108). When judging that an unprocessed access unit RAU is found (Y in Step S108), the motion estimation unit 101 considers the access unit RAU (namely, the access unit RAU immediately following the access unit RAU which has been the current one to be coded in Step S102) as a current one to be coded, obtains an entry picture included in the target access unit RAU, and processes the entry picture (Step S110). When judging that an unprocessed access unit RAU is not found (N in Step S108), the motion estimation unit 101 terminates the processing.

After Step S110, the motion estimation unit 101 judges whether or not a prompt random access starting from the target access unit RAU should be made possible, based on the obtained reference structure information Rsi (Step S112).

When judging that the random access should be made possible (Y in Step S112), the motion estimation unit 101 selects the reference pictures without establishing the reference relationships Rr1-Rr4 for each of the pictures in the target access unit RAU, and performs an estimation of a motion vector MV, or the like (Step S114). Subsequently, the motion estimation unit 101 repeats the operation starting from Step S108.

When judging, in Step S112, that the prompt random access should not be made possible (N in Step S112), the motion estimation unit 101 selects the reference pictures without establishing the reference relationships Rr3 and Rr4 for each of the pictures in the target access unit RAU, and performs an estimation of a motion vector MV, or the like (Step S116). Subsequently, the motion estimation unit 101 judges whether or not an unprocessed random access unit RAU is found (Step S118). When judging that an unprocessed random access unit RAU is found (Y in Step S118), the motion estimation unit 101 repeats the operation starting from Step S102. When judging that an unprocessed random access unit RAU is not found (N in Step S118), the motion estimation unit 101 terminates the processing.

Furthermore, when judging, in Step S104, that the prompt random access can be performed starting from the target access unit RAU (N in Step S104), the motion estimation unit 101 selects a reference picture without setting any restrictions for each of the pictures in the access unit RAU, performs an estimation of a motion vector MV, or the like (Step S120), and subsequently executes the operation starting from Step S118.

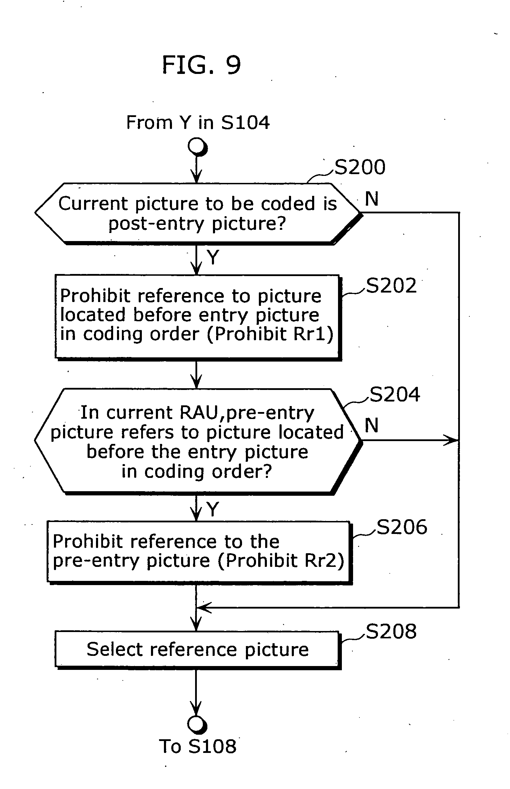

FIG. 9 is a flowchart showing a detailed operation in Step S106 described in FIG. 8 performed by the motion estimation unit 101.

The motion estimation unit 101 firstly judges whether or not a current picture to be coded is a post-entry picture (Step S200).

When judging that the current picture is a post-entry picture (Y in Step S200), the motion estimation unit 101 prohibits a reference to a picture located before the entry picture in coding order. Namely, the motion estimation unit 101 prohibits the reference relationship Rr1 (Step S202).

When judging that the current picture is not a post-entry picture (N in Step S200), the motion estimation unit 101 selects a reference picture for the current picture without setting any restrictions of the reference relationships Rr1 and Rr2, and performs processing such as estimation of a motion vector MV, or the like (Step S208).

After Step 202, the motion estimation unit 101 also judges, in the target access unit RAU, whether or not a pre-entry picture refers to a picture located before the entry picture in cording order (Step S204).

Here, when judging that the pre-entry picture refers to the picture thus located forwardly (Y in Step S204), the motion estimation unit 101 prohibits a reference to the pre-entry picture. That is to say, the motion estimation unit 101 prohibits the reference relationship Rr2 (Step S206). When judging that the pre-entry picture does not refer to the picture thus located forwardly (N in Step 204), the motion estimation unit 101 selects a reference picture for the current picture under the restriction that the reference relationship Rr1 is prohibited, and performs processing such as estimation of a motion vector MV, or the like (Step S208).

After Step S206, the motion estimation unit 101 selects a reference picture for the current picture under the restriction that the reference relationships Rr1 and Rr2 are prohibited, and performs processing such as estimation of a motion vector MV, or the like (Step S208).

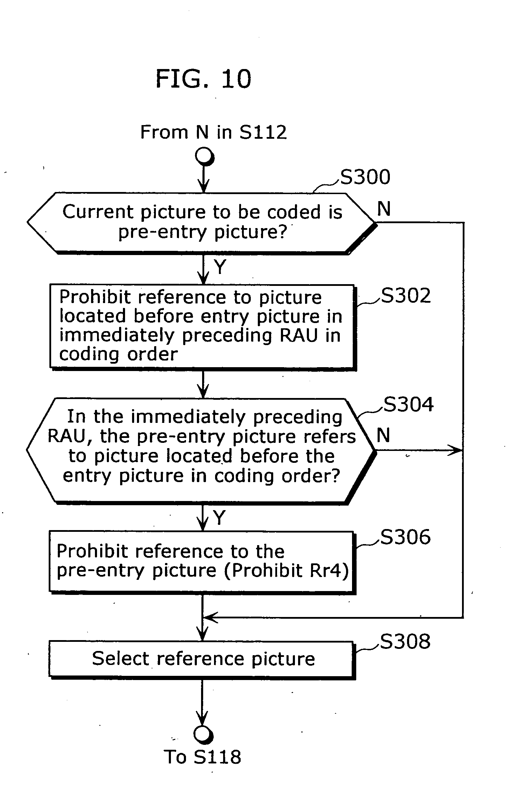

FIG. 10 is a flowchart showing a detailed operation of Step S116 shown in FIG. 8 performed by the motion estimation unit 101.

The motion estimation unit 101 firstly judges whether or not a current picture to be coded is a pre-entry picture (Step S300).

When judging that the current picture is a pre-entry picture (Y in Step S300), the motion estimation unit 101 prohibits, in the immediately preceding access unit RAU, a reference to a picture located before the entry picture in coding order. Namely, the motion estimation unit 101 prohibits the reference relationship Rr3 (Step S302).

Meanwhile, when judging that the current picture is not a pre-entry picture (N in Step S300), the motion estimation unit 101 selects a reference picture for the current picture without setting any restrictions on the reference relationships Rr3 and Rr4, and performs processing such as estimation of a motion vector MV, or the like (Step S308).

After Step S302, the motion estimation unit 101 judges, in the immediately preceding access unit RAU, whether or not the pre-entry picture refers to a picture located before the entry picture in coding order (Step S304).

Here, when judging that the pre-entry picture refers to the picture thus located forwardly (Y in Step S304), the motion estimation unit 101 prohibits a reference to the pre-entry picture. Namely, the motion estimation unit 101 prohibits the reference relationship Rr4 (Step S306). When judging that the pre-entry picture does not refer to the picture thus located forwardly (N in Step S304), the motion estimation unit 101 selects a reference picture for the current picture under the restriction that the reference relationship Rr3 is prohibited, and performs processing such as estimation of a motion vector MV, or the like (Step S308).

After Step S306, the motion estimation unit 101 selects a reference picture for the current picture under the restriction that the reference relationships Rr3 and Rr4 are prohibited, and performs processing such as estimation of a motion vector MV, or the like (Step S308).

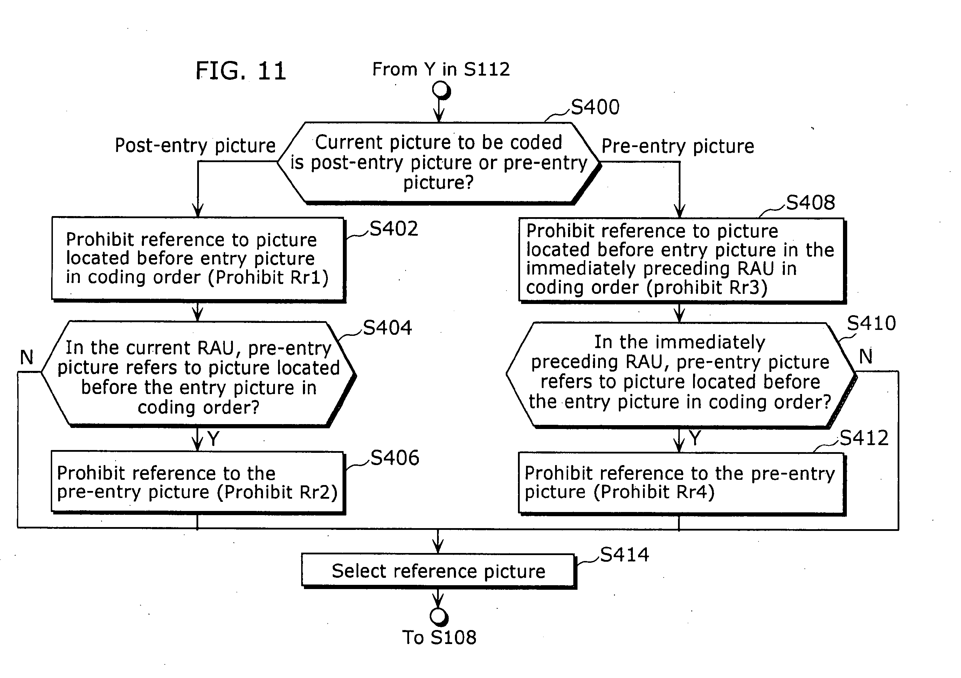

FIG. 11 is a flowchart showing a detailed operation of Step S114 shown in FIG. 8 performed by the motion estimation unit 101.

On the whole, the motion estimation unit 101 performs the operation of Steps S200-S208 shown in FIG. 9 and the operation of Steps S300-S308 shown in FIG. 10.

To be concrete, the motion estimation unit 101 judges whether a current picture to be coded is a pre-entry picture or a post-entry picture (Step S400).

When judging that the current picture is a pre-entry picture, the motion estimation unit 101 prohibits, in the target access unit RAU, a reference to a picture located before the entry picture in coding order. Namely, the motion estimation unit 101 prohibits the reference relationship Rr1 (Step S402).

The motion estimation unit 101 then judges, in the target access unit RAU, whether or not the pre-entry picture refers to a picture located before the entry picture in coding order (Step S404).

Here, when judging that the pre-entry picture refers to the picture thus located forwardly (Y in Step S404), the motion estimation unit 101 prohibits a reference to the pre-entry picture. Namely, the motion estimation unit 101 prohibits the reference relationship Rr2 (Step S406). When judging that the pre-entry picture does not refer to the picture thus located forwardly (N in Step S404), the motion estimation unit 101 selects a reference picture for the current picture under the restriction that the reference relationship Rr1 is prohibited, and performs processing such as estimation of a motion vector MV, or the like (Step S414).

After Step S406, the motion estimation unit 101 selects a reference picture for the current picture under the restriction that the reference relationships Rr1 and Rr2 are prohibited, and performs processing such as estimation of a motion vector MV, or the like (Step S414).

When judging, in Step S400, that the current picture is a pre-entry picture, the motion estimation unit 101 prohibits, in the immediately preceding access unit RAU, a reference to a picture located before the entry picture in coding order. Namely, the motion estimation unit 101 prohibits the reference relationship Rr3 (Step S408).

The motion estimation unit 101 then judges, in the immediately preceding access unit RAU, whether or not the pre-entry picture refers to a picture located before the entry picture in coding order (Step S410).

Here, when judging that the pre-entry picture refers to a picture thus located forwardly (Y in Step 410), the motion estimation unit 101 prohibits a reference to the pre-entry picture. Namely, the motion estimation unit 101 prohibits the reference relationship Rr4 (Step S412). When judging that the pre-entry picture does not refer to the picture thus located forwardly (N in Step S410), the motion estimation unit 101 selects a reference picture for the current picture under the restriction that the reference relationship Rr3 is prohibited, and performs processing such as estimation of a motion vector MV, or the like (Step S414).

After Step S412, the motion estimation unit 101 selects a reference picture for the current picture under the restriction that the reference relationships Rr3 and Rr4 are prohibited, and performs processing such as estimation of a motion vector MV, or the like (Step S414).

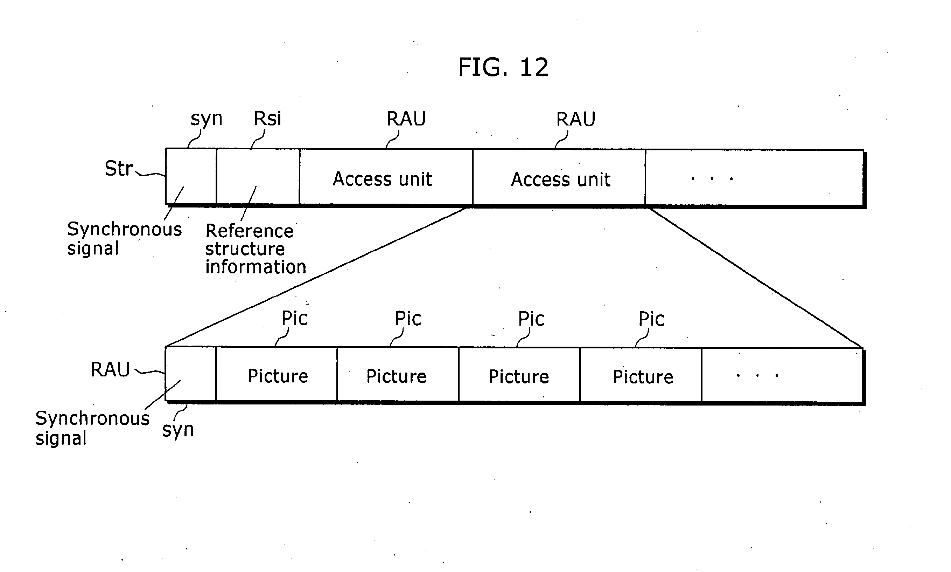

FIG. 12 is a structural diagram showing a structure of a coded picture signal Str outputted by the picture coding apparatus 100 according to the present embodiment.

The coded picture signal Str includes sequentially from the head a synchronous signal syn necessary for synchronization, reference structure information Rsi and plural access units RAU. The access unit RAU includes sequentially from the head a synchronous signal syn and plural pictures Pic.

Thus, in the present embodiment, the reference relationship is restricted so that the post-entry picture included in a target access unit to be processed does not have the reference relationships Rr1 and Rr2, and the pre-entry picture included in the immediately following access unit does not have the reference relationships Rr3 and Rr4. The picture decoding apparatus, having obtained the coded picture signal Str, therefore, can start performing random access rapidly from the target access unit without decoding a picture located before the target access unit.

The decrease in the compression rate in coding the picture signal Vin can be prevented for the following reasons: the pre-entry picture in the target access unit may refer to a picture located before the entry picture in coding order, that is, a picture included in the access unit preceding the target access unit; a reference relationship that crosses over the access unit is not prohibited by placing the IDR1 as described in the Background Art; and a reference picture is not restricted to the picture immediately before or after the target picture as is the case of the MPEG-2.

In the present embodiment, when the pre-entry picture refers to a picture located before the entry picture in coding order, the pre-entry picture shall not be selected as a reference picture, as the reference relationships Rr2 and Rr4 are prohibited. However, the pre-entry picture may not be selected as a reference picture regardless of whether or not the pre-entry picture refers to the picture located before the entry picture in coding order.

The picture order memory 112 is included in the motion estimation unit 101 in the present embodiment, however, it may be omitted by incorporating the function of the picture order memory 112 in the motion estimation unit 101.

Furthermore, the motion estimation unit 101 includes only three memories for storing candidate pictures Ref in the present embodiment as an example, but the number may be more than or equal to four.

### (Variation 1)

The coded picture signal according to the present variation includes reference structure information for each access unit, and the reference structure information indicates whether or not random access can be started promptly from each access unit.

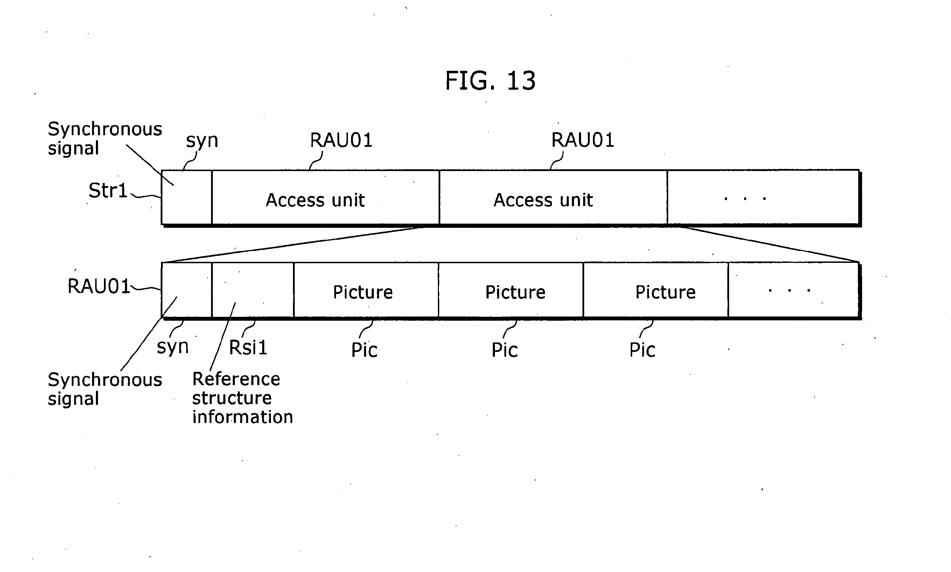

FIG. 13 is a structural diagram showing a structure of the coded picture signal according to the present variation.

The coded picture signal Str1 according to the present variation includes sequentially from the head a synchronous signal syn and plural access units RAU01.

The access unit RAU01 includes a synchronous signal syn, reference structure information Rsi1 and plural pictures pic. The reference structure Rsi1 indicates whether or not rapid random access can be started from the access unit RAU01. Namely, the reference control unit 113 outputs to each access unit RAU01, the reference structure information Rsi1 indicating whether or not each access unit RAU01 is to be processed as a unit from which rapid random access can be started.

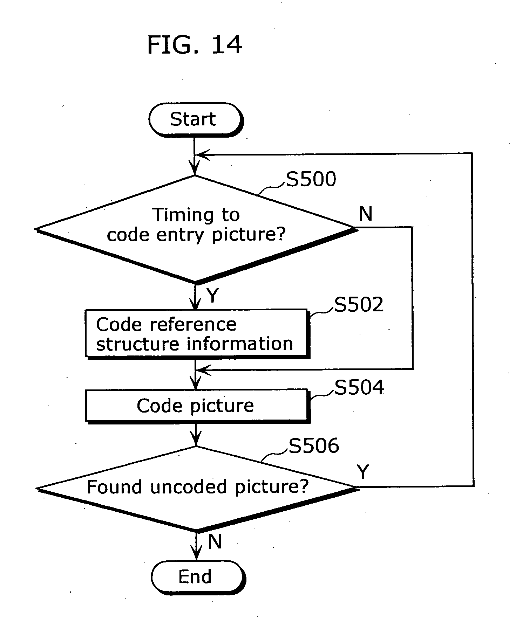

FIG. 14 is a flowchart showing an operation of generating a coded picture signal Str1, performed by the picture coding apparatus 100.

The picture coding apparatus 100 firstly obtains a picture signal Vin and judges whether or not it is the timing to code an entry picture (Step S500).

When judging that it is the timing to code the entry picture (Y in Step S500), the picture coding apparatus 100 codes the reference structure information Rsi1 indicating whether or not rapid random access can be performed starting from the access unit RAU01 to which the entry picture belongs (Step S502).

Either when judging that it is not the timing to code the entry picture (N in Step S500) or after Step S502 is processed, the picture coding apparatus 100 codes a picture (Step S504).

The picture coding apparatus 100 then judges whether or not any uncoded pictures are found (Step S506). In the case where such picture is found (Y in Step S506), the picture coding apparatus 100 repeats the operation starting from Step S500, but terminates the processing in the case where such picture is not found (N in Step S506).

The picture coding apparatus 100 according to the present variation may include, in each access unit RAU01 in the coded picture signal Str1, the random access "point information" (to be simply referred to as point information hereinafter) that includes the reference structure information Rsi1 as well as a parameter set that is information necessary for coding each of the pictures included in the access unit RAU01. The point information is to be placed at the head side of the access unit RAU01 and indicates the pictures to be decoded or to be displayed.

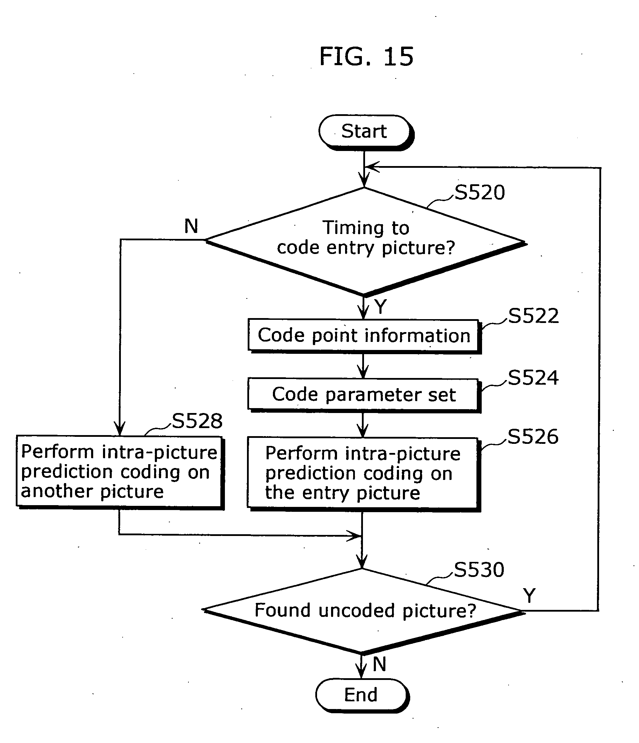

FIG. 15 is a flowchart describing an operation of the picture coding apparatus 100 for generating the coded picture signal Str1 which includes point information and a parameter set.

The picture coding apparatus 100 firstly obtains the picture signal Vin and judges whether it is the timing to code an entry picture (Step S520).

When judging that it is the timing to code the entry picture (Y in Step S520), the picture coding apparatus 100 codes the point information which includes the reference structure information Rsi1 (Step S522), and then further codes the parameter set (Step S524). The picture coding apparatus 100 then intra-picture codes the entry picture (Step S526).

When judging that it is not the timing to code the entry picture (N in Step S520), the picture coding apparatus 100 codes the pictures other than the entry picture (Step S528).

After Step S526 or S528, the picture coding apparatus 100 judges whether or not any uncoded pictures are found (Step S530). In the case where such picture is found (Y in Step S530), the picture coding apparatus 100 repeats the operation starting from Step S520, but terminates the processing in the case where such picture is not found (N in Step S530).

Thus, in the present variation, the reference structure information Rsi1 with less amount of information compared to the reference structure information Rsi is placed in the access unit RAU01 in the coded picture signal Str1 each time when the reference structure information Rsi1 is coded. Therefore, a storing area for storing the reference structure information Rsi1 can be made smaller than the storing area for storing the reference structure information Rsi, and consequently, the minimization of the picture coding apparatus 100 as a whole can be achieved.

### (Variation 2)

The reference structure information according to the present variation, as in the variation 1, does not simply indicate whether or not rapid random access can be started from an access unit corresponding to the reference structure information, but indicates a range of reference for each of the pictures included in the corresponding access unit.

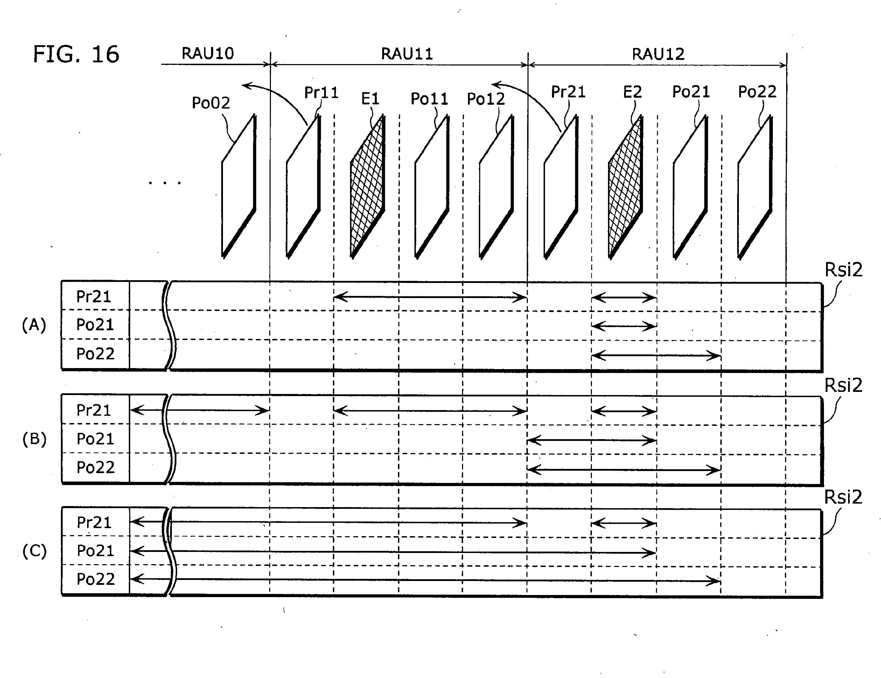

(A), (B) and (C) shown in FIG. 16 are information contents display diagrams showing the contents included in the reference structure information according to the present variation.

The reference structure information Rsi2 shown in (A) to (C) relates to the access unit RAU12.

The reference structure information Rsi2 shown in (A) of FIG. 16 indicates a range of reference prohibiting the reference relationships Rr1 and Rr2 to a pre-entry picture Pr21 as well as ranges of reference prohibiting the reference relationships Rr3 and Rr4 to post-entry pictures Po21 and Po22.

Namely, a picture to be used for reference for the pre-entry picture Pr21 indicated in the reference structure information Rsi2 can be any of the following: an entry picture E2, an entry picture E1, post-entry pictures Po11 and Po12. A picture to be used for reference for the post-entry picture Po21 indicated in the reference structure information Rsi2 is the entry picture E2. A picture to be used for reference for the post-entry picture Po22 indicated in the reference structure information Rsi2 can be either of the entry picture E2 and the post-entry picture Po21.

The reference structure information shown in (B) of FIG. 16 indicates a range of reference prohibiting the reference relationship Rr1 to the pre-entry picture Pr21 as well as ranges of reference prohibiting the reference relationship Rr4 to the post-entry pictures Po21 and Po22.

Namely, a picture to be used for reference by the pre-entry picture Pr21 indicated in the reference structure information Rsi2 can be any of the entry picture E2, the entry picture E1, the post-entry pictures Po11, Po12 and a picture included in the access unit RAU10 or in one of the previous access units RAU. A picture to be used for reference by the post-entry picture Po21 indicated in the reference structure information Rsi2 is either of the entry picture E2 and the pre-entry picture Pr21. A picture to be used for reference by the post-entry picture Po 22 indicated in the reference structure information Rsi2 can be any of the entry picture E2, the post-entry picture Po21 and the pre-entry picture Pr21.

The reference structure information Rsi2 shown in (C) of FIG. 16 indicates a range of reference without restrictions on the reference relationships to the pre-entry picture Pr21 as well as ranges of reference without restrictions on the reference relationships to the post-entry pictures Po21 and Po22.

Namely, a picture to be used for reference by the pre-entry picture Pr21 indicated in the reference structure information Rsi2 can be any of the following: the entry pictures E2, E1, the post-entry pictures Po11, Po12, the pre-entry picture Pr11 and a picture located in the access unit RAU10 or in one of the previous access units RAU. A picture to be used for reference by the post-entry picture Po22 indicated in the reference structure information Rsi2 can be any of the following: the entry pictures E2, E1, the pre-entry pictures Pr21, Pr11, the post-entry pictures Po11, Po12, Po21 and pictures included in the access unit RAU10 or in one of the previous access units RAU. In FIG. 16, the range of reference for each picture is shown in display order, but it may be shown in coding order instead.

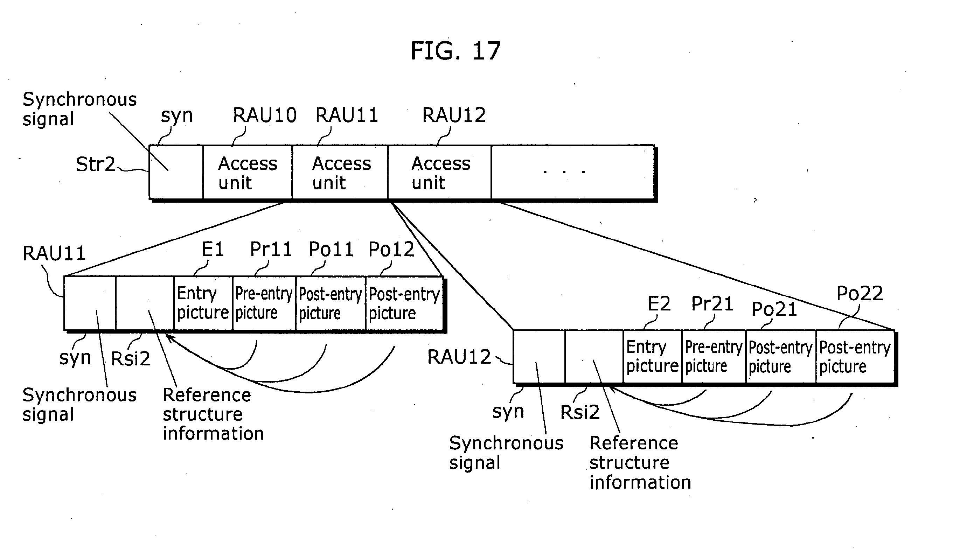

FIG. 17 is a structural diagram showing a structure of the coded picture signal which includes the reference structure information Rsi2.

The coded picture signal Str2, containing the reference structure information Rsi2, includes sequentially from the head a synchronous signal syn and the access units RAU10, RAU11 and RAU12.

The access unit RAU11 includes sequentially from the head a synchronous signal syn, reference structure information Rsi2, an entry picture E1, a pre-entry picture Pr11 and post-entry pictures Po11 and Po12. The access unit RAU12 includes sequentially from the head a synchronous signal syn, reference structure information Rsi2, an entry picture E2, a pre-entry picture Pr21, post-entry pictures Po21 and Po22.

The reference structure information Rsi2 included in the access unit RAU11 indicates ranges of reference for the pre-entry picture Pr11, the post-entry pictures Po11 and Po12. The reference structure information Rsi2 included in the access unit RAU12 indicates ranges of reference for the pre-entry picture Pr21 and the post-entry pictures Po21, Po22.

That is to say, the picture decoding apparatus, having obtained the coded picture signal Str2 according to the present variation, grasps the ranges of reference for the post-entry pictures Po11 and Po12 based on the reference structure information Rsi2 included in the access unit RAU11, as well as the range of reference for the pre-entry picture Pr21 based on the reference structure information Rsi2 included in the access unit RAU12. The picture decoding apparatus then judges that random access can be performed rapidly from the access unit RAU11 when judging that neither the reference relationships Rr1 and Rr2 can be established for the post-entry pictures Po11 and Po12 nor the reference relationships Rr3 and Rr4 can be established for the pre-entry picture Pr21.

In the present variation, the reference structure information Rsi2 indicates ranges of reference for all the pictures included in the access unit to which the reference structure information Rsi2 belongs. However, it may indicate ranges of reference for the pictures included in another access unit.

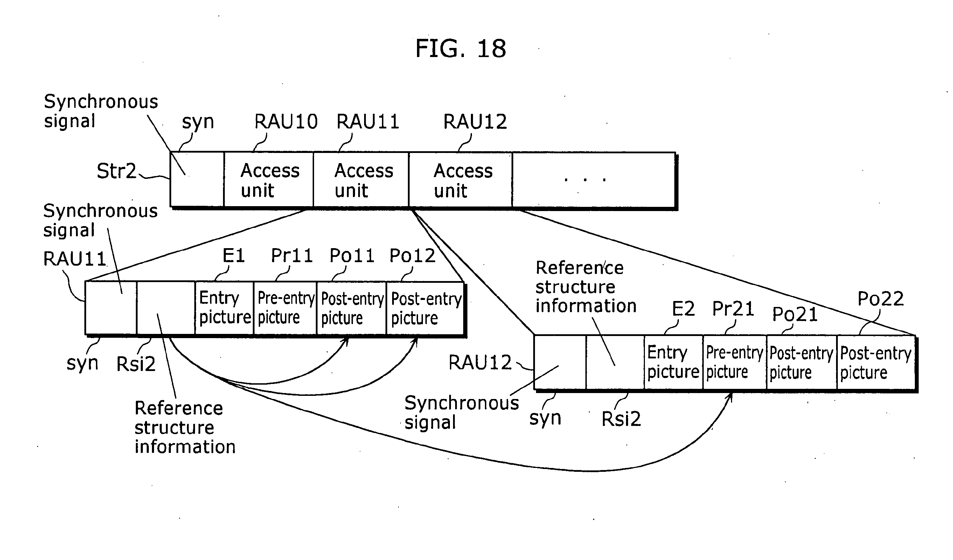

FIG. 18 is an illustration for explaining how the reference structure information Rsi2 indicates a range of reference for each of the pictures included in the access unit to which it belongs, and for the pictures included in another access unit.

The reference structure information Rsi2 included in the access unit RAU11 indicates ranges of reference for the post-entry pictures Po11, Po12 and for the pre-entry picture Pr21 included in the access unit RAU12.

Thus, the picture decoding apparatus, having obtained the coded picture signal Str2, can grasp the ranges of reference for the post-entry pictures Po11 and Po12 based only on the reference structure information Rsi2 included in the access unit RAU11 as well as the range of reference for the pre-entry picture Pr21, and judge whether or not random access can be performed rapidly starting from the access unit RAU11.

In the present variation, the reference structure information Rsi2 indicates a range of reference for each picture, but it may indicate a restriction level of reference relationships for each picture. For example, the reference structure information Rsi2 indicates restriction levels 0, 1 and 2 for a predetermined post-entry picture. The restriction level 0 signifies that the post-entry picture has neither the reference relationship Rr1 nor Rr2, the restriction level 1 signifies that the post-entry picture does not have the reference relationship Rr1, and the restriction level 2 signifies that the post-entry picture does not receive any restrictions on reference. The reference structure information Rsi2 also indicates restriction levels 0, 1 and 2 for a predetermined pre-entry picture. The restriction level 0 signifies that the pre-entry picture has neither the reference relationship Rr3 nor Rr4, the restriction level 1 signifies that the pre-entry picture does not have the reference relationship Rr3, and the restriction level 2 signifies that the pre-entry picture does not receive any restrictions on reference.

The picture decoding apparatus, having obtained the reference structure information Rsi2 as described above, judges whether or not the post-entry picture has the reference relationships Rr1 and Rr2 as well as whether or not the pre-entry picture has the reference relationships Rr3 and Rr4, based on the reference structure information Rsi2.

### (Variation 3)

The coded picture signal according to the present variation is structured without the reference structure information and is stored in a storing medium as a signal that composes media data.

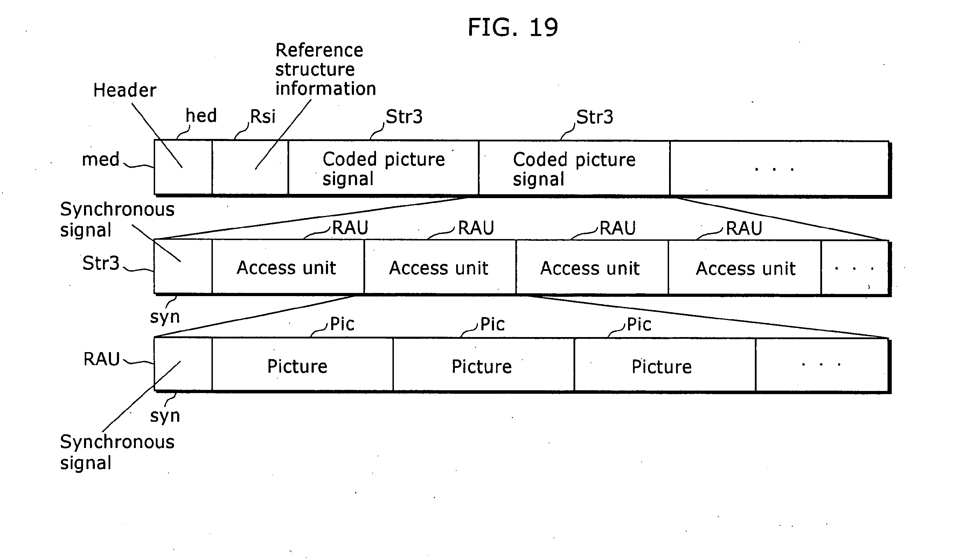

FIG. 19 is a structural diagram showing a structure of the media data stored in the storing medium.

The media data med includes sequentially from the head a header hed, reference structure information Rsi, and plural coded picture signals Str3.

Each coded picture signal Str3 includes sequentially from the head a synchronous signal syn and plural access units RAU.

Each access unit RAU includes sequentially from the head a synchronous signal syn and plural pictures Pic.

Namely, the picture decoding apparatus obtains the reference structure information Rsi from the media data med stored in the storage medium, and specifies an access unit RAU included in the coded picture signal Str3 from which random access can be rapidly operated, based on the reference structure information Rsi.

### (Variation 4)

The picture coding apparatus 100 according to the present variation generates and outputs a coded picture signal Str3 without reference structure information, and a reference table composed of plural pieces of reference structure information Rsi2 corresponding to each of the access units RAU included in the coded picture signal Str3.

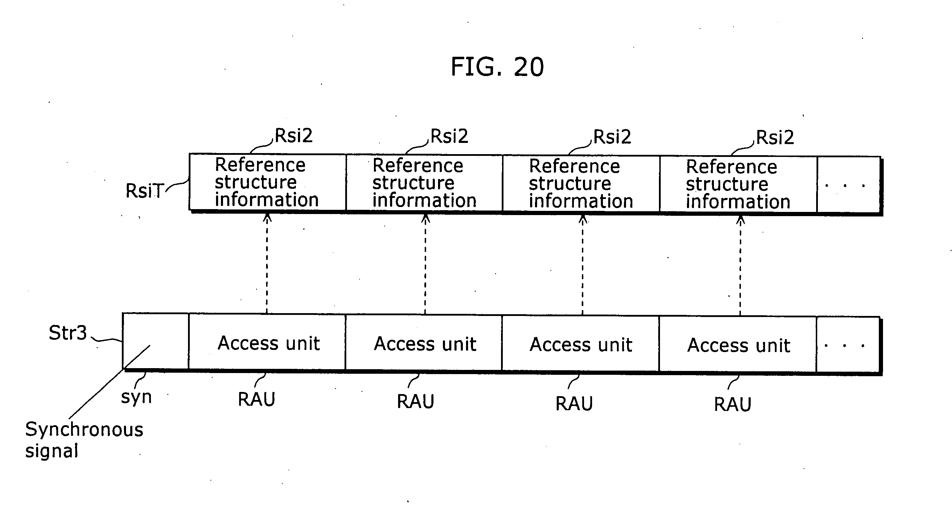

FIG. 20 is a structural diagram showing structures of the coded picture signal Str3 and the reference table.

The reference table RsiT includes plural units of reference structure information Rsi2 corresponding one by one to each of the access units RAU included in the coded picture signal Str3. For example, each of the access units RAU in the coded picture signal Str3 corresponds sequentially from the head to each unit of reference structure information Rsi2 in the reference table RsiT. Namely, the first access unit RAU included in the coded picture signal Str3 corresponds to the first reference structure information Rsi2 in the reference table RsiT whereas the second access unit RAU corresponds to the second reference structure information Rsi2.

In the present variation, the reference table RsiT consists of plural units of reference structure information Rsi2, but it may consist of plural units of reference structure information Rsi1 instead. The picture coding apparatus 100 may not code the reference structure information and generate a reference table RsiT based on the uncoded reference structure information.

### (Variation 5)

The picture coding apparatus 100 according to the present variation outputs the coded picture signal that includes reference identification information for identifying the reference structure information Rsi2, and the reference table RsiT.

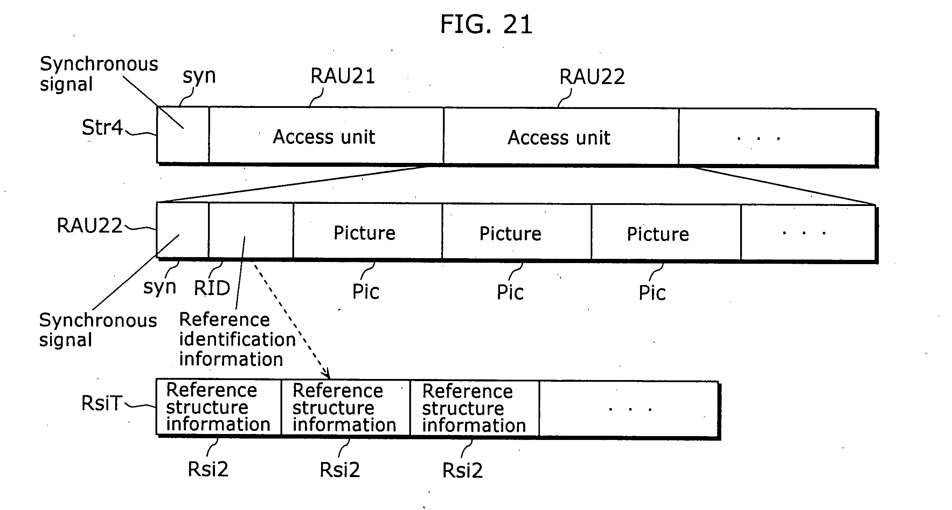

FIG. 21 is a structural diagram showing a structure of the coded picture signal which includes the reference identification information.

The coded picture signal Str4 includes, sequentially from the head, a synchronous signal syn as well as access units RAU21 and RAU22.

The access unit RAU22 includes sequentially from the head a synchronous signal syn, reference identification information RID for identifying the reference structure information Rsi2, and plural pictures Pic.

The reference identification information RID indicates, for instance, the second reference structure information Rsi2 included in the reference table RsiT.

Namely, the picture decoding apparatus, having obtained the coded picture signal Str4 and the reference table RsiT, identifies the second reference structure information Rsi2 in the reference table RsiT based on the reference identification information RID included in the access unit RAU22. The picture decoding apparatus then grasps the range of reference for each of the pictures included in the access unit RAU22, based on the identified reference structure information Rsi2.

The reference identification information RID included in the access unit RAU21 may indicate the same reference structure information Rsi2 which is located secondly in the reference table RsiT, as indicated by the reference identification information RID included in the access unit RAU22.

Thus, in the present variation, a single piece of reference structure information Rsi2 can be correlated with plural access units by including the reference identification information RID in the access unit. Therefore, the reference structure information Rsi2 having the same contents does not need to be included in the reference table RsiT, which can reduce the amount of information for the reference table RsiT.

### (Variation 6)

The picture coding apparatus 100 according to the present variation outputs the coded picture signal Str3 which does not include the reference structure information, a reference table RsiT, and an identification table consisting of plural pieces of reference identification information RID.

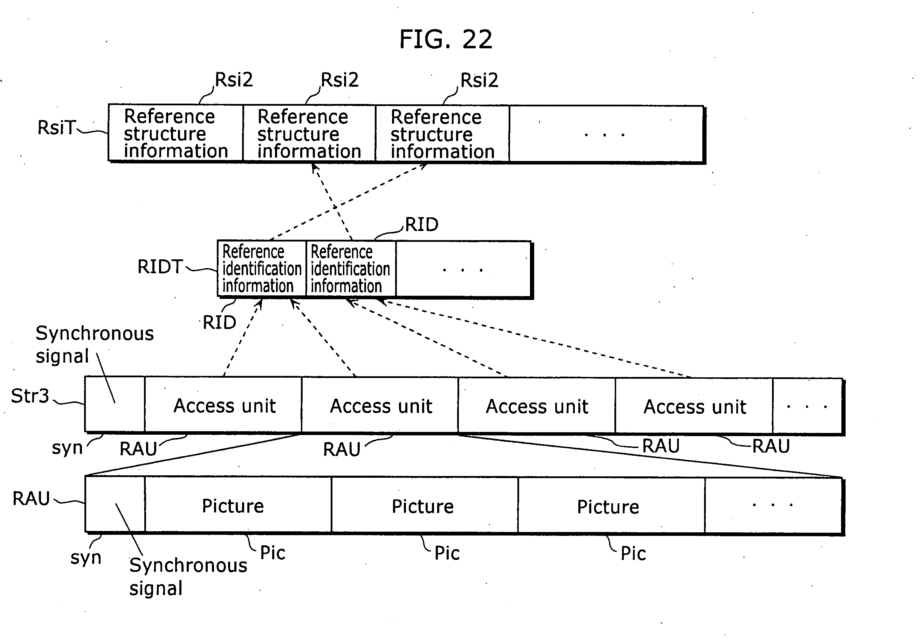

FIG. 22 is a structural diagram showing a structure of the identification table.

The identification table RIDT includes plural units of reference identification information RID. The first reference identification information RID indicates, for example, the third reference structure information Rsi2 in the reference table RsiT whereas the second reference identification information RID, for instance, indicates the second reference structure information Rsi2 in the reference table RsiT.

Each unit of the reference identification information RID included in the identification table RIDT corresponds sequentially to two access units RAU from the head. Namely, the first reference identification information RID corresponds to the first and second access units RAU from the head of the coded picture signal Str3 whereas the second reference identification information RID corresponds to the third and fourth access units RAU.

Namely, the picture decoding apparatus, having obtained the coded picture signal Str3, the reference table RsiT and the identification table RIDT, identifies the third reference structure information Rsi2 included in the reference table RsiT, based on the first reference identification information RID included in the identification table RIDT associated with the first access unit RAU in the coded picture signal Str3. The picture decoding apparatus grasps the range of reference for each of the pictures included in the first access unit RAU, based on the identified reference structure information Rsi2.

### (Second Embodiment)

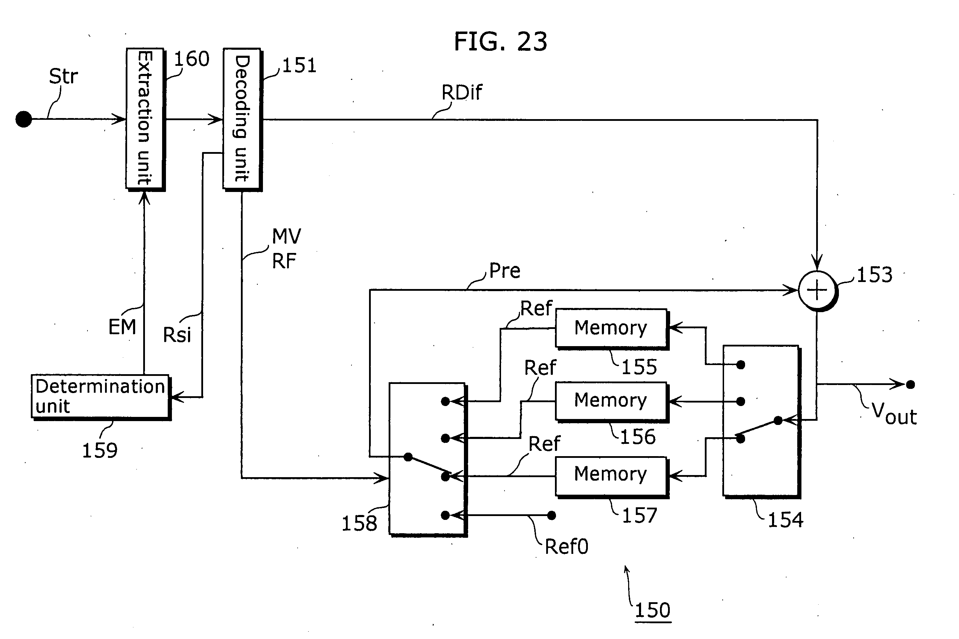

FIG. 23 is a block diagram showing a structure of the picture decoding apparatus according to the second embodiment of the present invention.

The picture decoding apparatus 150 according to the present embodiment decodes the coded picture signal Str generated by the picture coding apparatus 100 according to the first embodiment. The picture decoding apparatus 150 is composed of a decoding unit 151, an adder 153, a selection unit 154, memories 155-157, a motion compensation unit 158, a determination unit 159 and an extraction unit 160.

The extraction unit 160 obtains the coded picture signal Str from the picture coding apparatus 100 and temporally stores it. The extraction unit 160 firstly outputs, to the decoding unit 151, the reference structure information Rsi included in the obtained coded picture signal Str. The extraction unit 160 then outputs, to the decoding unit 151, the access units RAU included in the coded picture signal Str, based on the instruction received from the determination unit 159.

Having obtained the reference structure information Rsi from the extraction unit 160, the decoding unit 151 decodes and outputs it to the determination unit 159. The decoding unit 151, obtaining each of the access units RAU included in the coded picture signal Str from the extraction unit 160, further decodes each of the access units RAU, and outputs a decoded differential picture signal RDif, a motion vector MV and specification information RF.

The determination unit 159, obtaining the decoded reference structure information Rsi from the decoding unit 151, specifies, based on the reference structure information Rsi, the access unit RAU from which random access can be rapidly operated out of the access units RAU included in the coded picture signal Str. Namely, the determination unit 159 determines the access unit RAU from which rapid random access can be operated.

Then, the determination unit 159, outputs, to the extraction unit 159, for instance, according to the user's operation, a specification signal EM for specifying the access unit RAU that is to be a position to start performing random access.

Namely, the extraction unit 160 as mentioned above outputs sequentially, to the decoding unit 151, each of the access units RAU included in the coded picture signal Str, starting from the access unit RAU specified by the specification signal EM.

The adder 153 adds the predictive picture Pre to the decoded differential picture signal RDif and outputs a decoded picture signal Vout.

The selection unit 154 selects one of the memories 155-157 and outputs the decoded picture signal Vout to the memory so that the decoded picture signal Vout is used as a reference picture in decoding the subsequent pictures. For example, the selection unit 154 selects a memory storing the oldest decoded picture signal Vout from among the memories 155-157.

The memories 155-157 obtain the decoded picture signal Vout from the selection unit 154, and store it as a candidate picture Ref to be a candidate for a reference picture. When storing a new candidate picture Ref, the memories 155-157 also remove the oldest candidate picture Ref which is already stored.

The motion compensation unit 158 uses as a reference any of the following, based on the specification signal RF outputted from the decoding unit 151: three candidate pictures Ref stored in the memories 155-157 and a candidate picture Ref0 having a value "0". That is to say, when the specification signal RF indicates a candidate picture Ref similar to the picture signal Vin, the motion compensation unit 158 obtains the candidate picture Ref specified in the specification signal RF from the memory which stores the specified candidate picture Ref. When the specification signal RF instructs the motion compensation unit 158 to perform intra-picture prediction coding, the motion compensation unit 158 obtains a candidate picture Ref0 having a value "0". When obtaining a candidate picture Ref as a reference picture, the motion compensation unit 158 extracts, from the obtained reference picture, an image area that is the most suitable for a predictive picture Pre using the motion vector MV, generates a predictive picture Pre using the extracted image area and outputs it. When obtaining a candidate picture Ref0, the motion compensation unit 158 generates a predictive picture Pre having a value "0", and outputs it.

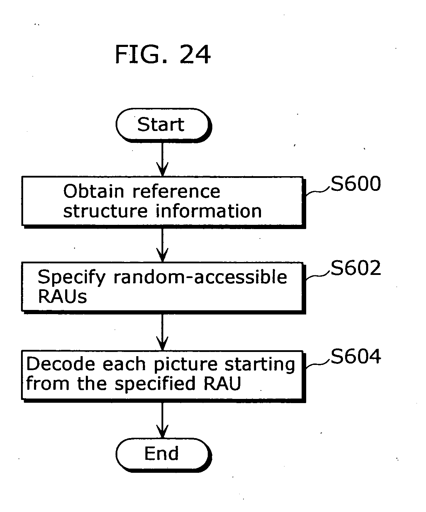

FIG. 24 is a flowchart schematically showing an operation performed by the picture decoding apparatus 150.

The picture decoding apparatus 150 firstly obtains the reference structure information Rsi included in the coded picture signal Str, and decodes it (Step S600). The picture decoding apparatus 150 specifies random-accessible units RAU, each from which rapid random access can be performed, based on the reference structure information Rsi (Step S602). The picture decoding apparatus 150 decodes each picture starting from the access unit RAU specified by the user out of the specified access units RAU (Step S604).

The picture decoding apparatus 150 according to the present embodiment can thus specify the access unit RAU from which rapid random access can be started based on the reference structure information Rsi included in the coded picture signal Str, and also, can perform rapid random access starting from the specified access unit RAU without decoding the previous picture.

The picture decoding apparatus 150 may perform decoding on the coded picture signal Str1 according to the variation 1 illustrated in the first embodiment.

In this case, the reference structure information Rsi1 is included in each access unit RAU01, therefore, the extraction unit 160 firstly outputs, to the decoding unit 151, the reference structure information Rsi1 included in each access unit RAU01. The determination unit 159 then determines the access unit RAU01 from which rapid random access can be operated, based on each unit of decoded reference structure information Rsi1.

Also, the decoding unit 151 may make the above determination, namely, that is, judging whether or not rapid random access can be operated. In this case, when the determination unit 159 informs the extraction unit 160 of the predetermined access unit RAU01, the extraction unit 160 outputs, to the decoding unit 151, the reference structure information Rsi1 included in the access unit RAU01. Then, the decoding unit 151 decodes the reference structure information Rsi1 and judges, based on the decoded reference structure information Rsi1, whether or not rapid random access can be operated starting from the access unit RAU01 which includes the reference structure information Rsi1. When judging that such random access can be operated, the decoding unit 151 performs decoding by outputting, from the extraction unit 160, each access unit RAU01 included in the access unit RAU01 and the following access units RAU.

When the access unit RAU01 includes the point information which contains the reference structure information Rsi1, and the parameter set, the picture decoding apparatus 150 decodes them as well.

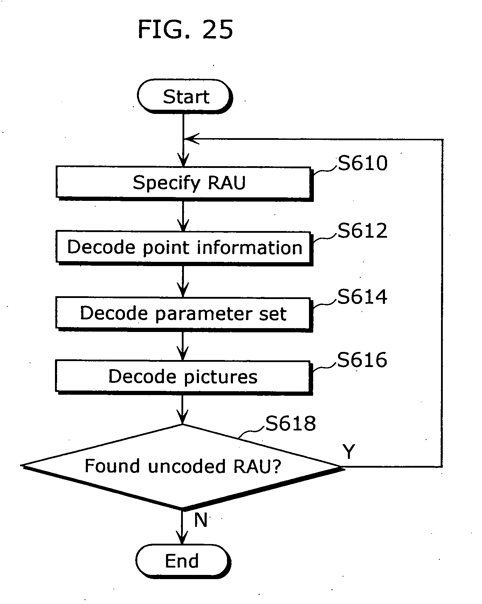

FIG. 25 is a flowchart showing an operation of coding the coded picture signal Str1 which includes point information and a parameter set, performed by the picture decoding apparatus 150. The access unit RAU01 is represented as an RAU in FIG. 25.

The picture decoding apparatus 150 firstly specifies a current access unit RAU01 to be decoded (Step S610), and decodes the point information included in the access unit RAU01 (Step S612). The picture decoding apparatus 150 then decodes the parameter set (Step S614) and then all the pictures included in the access unit RAU01 (Step S616). Then, the picture decoding apparatus 150 judges whether or not any uncoded access units RAU01 are found (Step S618). When judging that an uncoded access unit RAU01 is found (Y in Step S618), the picture decoding apparatus 150 repeats the operation from Step S610, but terminates the decoding processing when judging that no uncoded access units RAU01 are found (N in Step S618).

### (Variation 1)

The picture decoding apparatus 150 according to the present variation decodes the coded picture signal Str2 according to the variation 2 illustrated in the first embodiment.

In this case, the reference structure information Rsi2 is included respectively in the access units RAU10, RAU11, ... , therefore, the extraction unit 160 firstly outputs, to the picture decoding apparatus 150, the reference structure information Resi2 included in the respective access units RAU10, RAU11, .... Then, the determination unit 159 determines the access unit from which rapid random access can be operated, based on each unit of decoded reference structure information Rsi2.

More precisely, the reference structure information Rsi2 indicates a range of reference for each of the pictures included in the access unit to which the reference structure information Rsi2 belongs. The determination unit 159 therefore judges whether or not a target access unit to be judged whether or not rapid random access can be started includes a picture having the reference relationships Rr1 and Rr2 and whether or not the immediately following access unit includes a picture having the reference relationships Rr3 and Rr4. The judgments are made based on the range of reference indicated in the reference structure information Rsi2 included in the target access unit and the range of reference indicated in the reference structure information Rsi2 included in the immediately following access unit. Consequently, when judging that the target access unit includes neither a picture having the reference relationships Rr1 and Rr2 nor a picture having the reference relationships Rr3 and Rr4, the determination unit 159 recognizes that it is possible to start rapid random access from the target access unit.

Even when the determination unit 159 recognizes that it is possible to start rapid random access from the target access unit, there is a case in which a pre-entry picture in the target access unit refers to a picture located before an entry picture in the target access unit in coding order (a picture in the immediately preceding access unit or in one of the following access units).

In this case, the pre-entry picture cannot be decoded even when random access is attempted from the access unit that includes the pre-entry picture. However, such pre-entry picture is not referred to by other pictures, therefore, the pre-entry picture needs to be neither decoded nor displayed.

Therefore, the determination unit 159 according to the present variation, judges the necessity of decoding the pre-entry picture included in the access unit that is to be a position to start performing random access, based on the range of reference indicated in the reference structure information Rsi2 included in the immediately following access unit. Namely, in the case where the range of reference for the pre-entry picture in the immediately following access unit includes the pre-entry picture in the access unit to be the starting position, the determination unit 159 judges that the pre-entry picture needs to be decoded. In the case where the pre-entry picture is not included in the range of reference, the determination unit 159 judges that the pre-entry picture does not need to be decoded.

When judging that there is no need to perform decoding, the determination unit 159 then instructs the extraction unit 160 to output the access unit to be the starting position and the following access units, except for the pre-entry picture included in the access unit to be the starting position, out of the access units included in the coded picture signal Str2.

Thus, the' picture decoding apparatus 150 according to the present variation can omit the inappropriate processing for pictures, and thus improve the efficiency in the decoding processing.

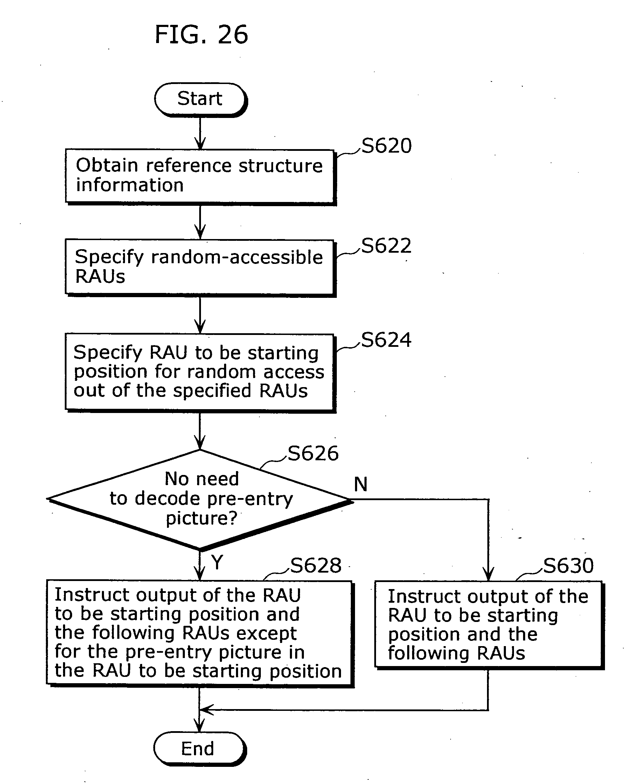

FIG. 26 is a flowchart showing an operation performed by the determination unit 159 in the picture decoding apparatus 150 according to the present variation.

The determination unit 159 firstly obtains, from the decoding unit 151, the reference structure information Rsi2 included in each access unit (Step S620). The determination unit 159 then specifies the random-accessible access unit, each from which rapid random access can be started, based on the obtained reference structure information Rsi2 (Step S622).

The determination unit 159 then further specifies the access unit to be a position to start performing random access the access units specified in Step S622 (Step S624).

The determination unit 159 then judges whether or not the pre-entry picture in the access unit to be the starting position needs to be decoded, based on the reference structure information Rsi2 in the access unit immediately following the access unit to be the starting position (Step S626).

When judging that the decoding of the pre-entry picture is unnecessary (Y in Step S626), the determination unit 159 instructs the extraction unit 160 to output the access unit to be the starting position and the following access units, except for the pre-entry picture included in the access unit to be the starting position, out of the access units included in the coded picture signal Str2 (Step S 628). When judging that the decoding of the pre-entry picture is not unnecessary (N in Step S626), the determination unit 159 instructs the extraction unit 160 to output all the access units starting from the access unit that is to be the starting position and the following access units, out of the access units included in the coded picture signal Str2 (Step S630).

As shown in FIG. 18, in the case where the reference structure information Rsi2 included in the target access unit, which is to be judged whether or not rapid random access can be started, indicates ranges of reference for the post-entry pictures included in the target access unit and a range of reference for the pre-entry picture included in the immediately following access unit, the determination unit 159 judges whether or not rapid random access can be started from the target access unit and whether or not the pre-entry picture included in the target access unit needs to be decoded, based only on the reference structure information Rsi2 included in the target access unit.

### (Variation 2)

The picture decoding apparatus 150 according to the present variation decodes the coded picture signal Str3 according to the variation 3 of the first embodiment.

Here, the header hed of the media data med stored in the storing medium includes related information concerning each coded picture signal Str3 in the media data med.

The information indicates whether it is possible to start rapid random access from any access unit RAU in each coded picture signal Str3, and if it is possible, indicates that the pre-entry picture included in the access unit to be the starting position does not need to be decoded.

The picture decoding apparatus 150 according to the present variation refers to the header hed of the media data med stored in the storing medium. When the header hed includes the related information indicating that rapid random access can be operated, the picture decoding apparatus 150 judges that rapid random access can be operated on the coded picture signal Str3 starting from any access unit RAU without referring to the reference structure information Rsi.

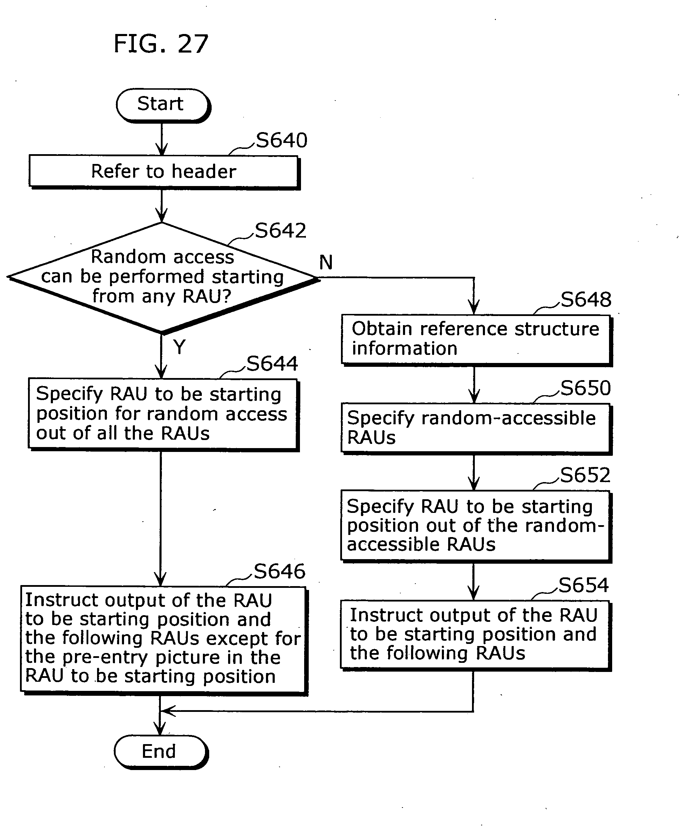

FIG. 27 is a flowchart showing an operation performed by the determination unit 159 in the picture decoding apparatus 150 according to the present variation.

The determination unit 159 firstly obtains the header hed through the extraction unit 160 and the decoding unit 151 (Step S640), and judges whether or not rapid random access can be performed starting from any access unit RAU, for each of the coded picture signal Str included in the media data med, based on the related information included in the header hed (Step S642).

When judging that it is possible to perform rapid random access from any access unit RAU (Y in Step S642), the determination unit 159 specifies the access unit RAU to be a position to start performing random access out of all the access units RAU (Step S644).

The determination unit 159 then instructs the extraction unit 160 to output the access unit RAU determined as the starting position and the following access units RAU, except for the pre-entry picture included in the access unit RAU determined as the starting position (Step S646).

When judging that rapid random access cannot be performed from any access unit RAU in Step S642 (N in Step S642), the determination unit 159 obtains the reference structure information Rsi from the decoding unit 151 (Step S648), and specifies the access units RAU on which rapid random access can be performed (Step S650).

Subsequently, the determination unit 159 further specifies the access unit RAU to be the starting position out of the access units RAU on which random access can be performed (Step S652).

The determination unit 159 then instructs the extraction unit 160 to output the access unit RAU determined as the starting position and the following access units RAU (Step S654).

In the present variation, whether or not rapid random access can be operated starting from any access unit RAU is judged based on the header hed in the media data med. However, it may be judged by identifying the type of the storing medium that stores the media data med based on its physical characteristics.

### (Variation 3)

The picture decoding apparatus according to the present variation obtains the coded picture signal Str3 generated by the picture coding apparatus 100 according to the variation 4 illustrated in the first embodiment, as well as the reference table RsiT, and then decodes the coded picture signal Str3.

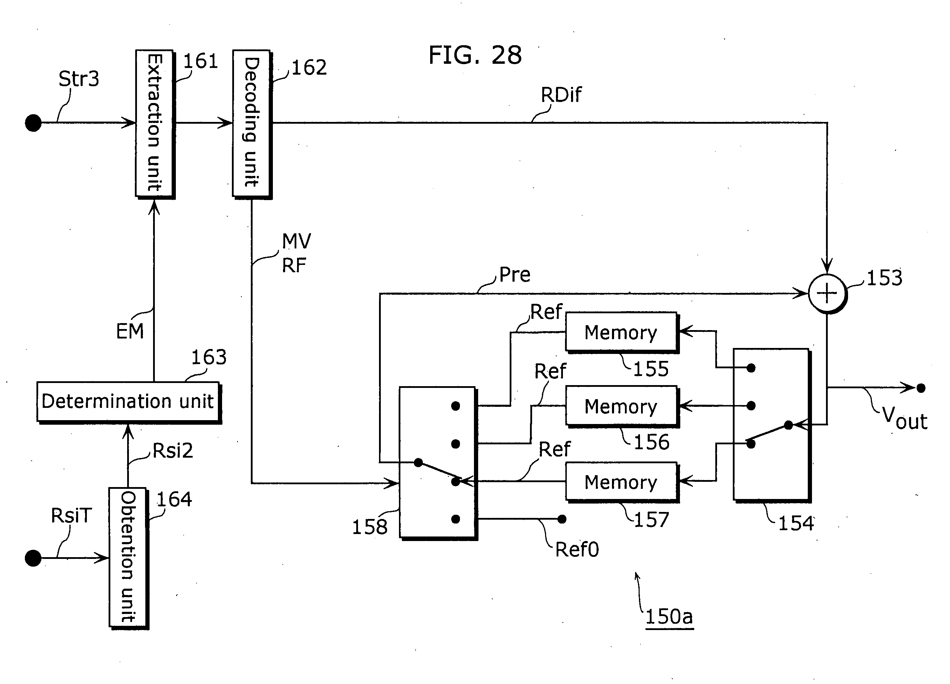

FIG. 28 is a block diagram showing a structure of the picture decoding apparatus according to the present variation.

The picture decoding apparatus 150a is composed of an adder 153, a selection unit 154, memories 155-157, a motion compensation unit 158, an extraction unit 161, a decoding unit 162, a determination unit 163 and an obtention unit 164.

Since the components included in the picture decoding apparatus 150a with the same referential marks as those put on the components in the picture decoding apparatus 150 have the same function as the components in the picture decoding apparatus 150, the explanation is omitted.

The obtention unit 164 obtains the reference table RsiT, and sequentially outputs from the head, the reference structure information Rsi2 included in the reference table RsiT, to the determination unit 163.

The determination unit 163, having obtained the reference structure information Rsi2 from the obtention unit 164, specifies the access unit RAU from which rapid random access can be performed, out of the access units RAU included in the coded picture signal Str3, based on the reference structure information Rsi2. Namely, the determination unit 163 determines the access unit RAU from which rapid random access can be operated. The determination unit 163 then outputs, for instance, according to the user's operation, the specification signal EM for specifying the access unit RAU to be a position to start performing random access.

The extraction unit 161 obtains the coded picture signal Str3 and stores it temporally. Then, the extraction unit 160 outputs, to the decoding unit 162, the access unit RAU specified by the specification signal EM and the following access units RAU out of the access units RAU included in the coded picture signal Str3.

The decoding unit 162, obtaining each access unit RAU included in the coded picture signal Str3 from the extraction unit 161, decodes each of the access units RAU and outputs a decoded differential picture signal RDif, a motion vector MV and specification information RF.

### (Third Embodiment)

Furthermore, the processing illustrated in each of the above embodiments can be carried out easily in an independent computer system by recording a program for realizing the picture coding method described in the above embodiments onto a recording medium such as a flexible disk or the like.

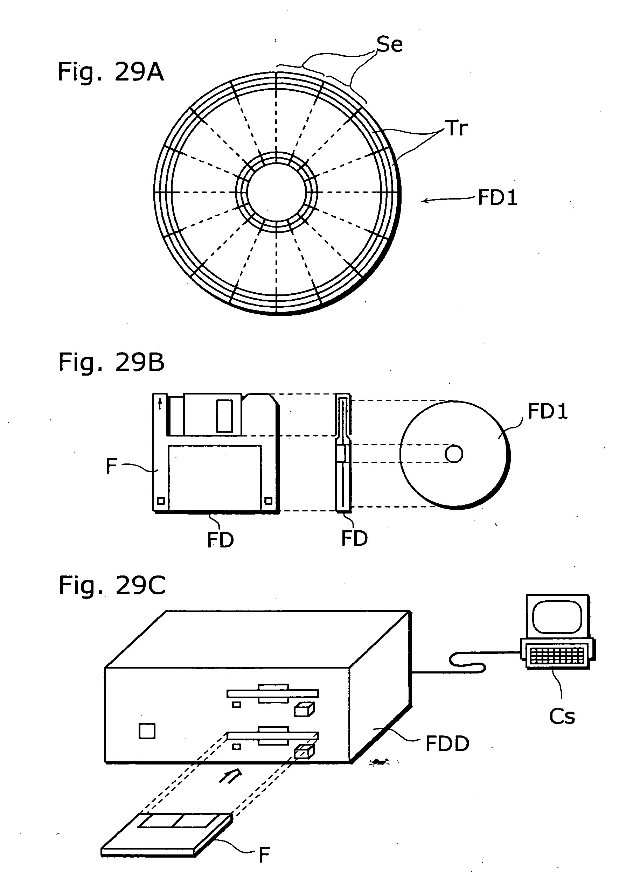

FIGS. 29A, 29B and 29C are illustrations of a recording medium, on which a program for carrying out the picture coding method described in the first or second embodiments in the computer system is recorded.

FIG. 29B shows a full appearance of a flexible disk FD, its structure at cross section and a full appearance of the disk body FD1 as a main body of a recording medium whereas FIG. 29A shows an example of a physical format of the disk body FD1.

The disk body FD 1 is contained in a case F with a plurality of tracks Tr formed concentrically from the periphery to the inside on the surface of the disk body FD1, and each track is divided into 16 sectors Se in the angular direction. Thus, the picture coding method as the program mentioned above is recorded in an area assigned for it on the flexible disk body FD1.

FIG. 29C shows a structure for recording and reading the program in and out of the flexible disk FD.

When the program is recorded on the flexible disk FD, the computer system Cs writes in the picture coding method as the program mentioned above via a flexible disk drive FDD. When the picture coding method is constructed in the computer system Cs using the program on the flexible disk FD, the program is read out from the flexible disk FD and then transferred to the computer system Cs by the flexible disk drive FDD.

In the above explanation, the flexible disk FD is used as an example of a recording medium, however, the same processing can also be performed using an optical disk. In addition, the recording medium is not limited to these mentioned above, but any other medium capable of recording a program such as an IC card and a ROM cassette can be employed.

### (Fourth Embodiment)

The following is a description for the applications of the picture coding method and the picture decoding method illustrated in the above-mentioned embodiments and a system using them.

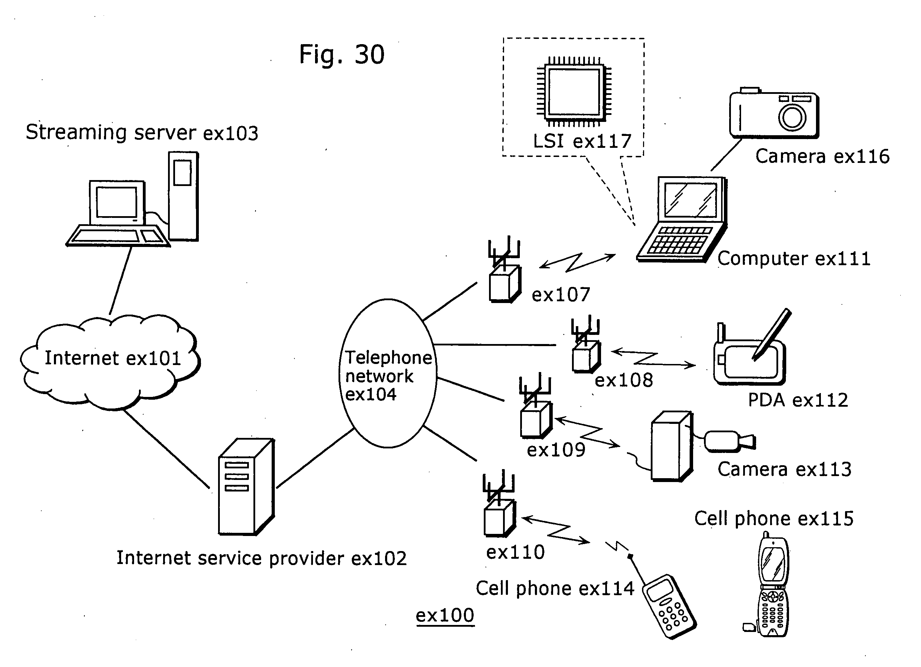

FIG. 30 is a block diagram showing an overall configuration of a content supply system ex100 for providing content delivery services. The area for providing communication service is divided into cells of desired size, and cell sites ex107-ex110, which are fixed wireless stations, are placed in respective cells.

This content supply system ex100 is connected to apparatuses such as a computer ex111, a Personal Digital Assistant (PDA) ex112, a camera ex113, a cell phone ex114 and a cell phone with a camera ex115 via, for example, Internet ex101, an Internet service provider ex102, a telephone network ex104, as well as the cell sites ex107-ex110.

However, the content supply system ex100 is not limited to the configuration shown in Fig. 30 and may be connected to a combination of any of them. Also, each apparatus may be connected directly to the telephone network ex104, not through the cell sites ex107-ex110.

The camera ex113 is an apparatus capable of shooting video such as a digital video camera. The cell phone ex114 may be a cell phone of any of the following system: a Personal Digital Communications (PDC) system, a Code Division Multiple Access (CDMA) system, a Wideband-Code Division Multiple Access (W-CDMA) system or a Global System for Mobile Communications (GSM) system, a Personal Handyphone System (PHS) or the like.

A streaming server ex103 is connected to the camera ex113 via the telephone network ex104 and also the cell site ex109, which realizes a live distribution or the like using the camera ex113 based on the coded data transmitted from the user. Either of the camera ex113, the server which transmits the data and the like may code the data. The moving picture data shot by a camera ex116 may be transmitted to the streaming server ex103 via the computer ex111. In this case, either the camera ex116 or the computer ex111 may code the moving picture data. An LSI ex117 included in the computer ex111 and the camera ex116 performs the coding processing. Software for coding and decoding pictures may be integrated into any type of recording medium (such as a CD-ROM, a flexible disk and a hard disk) that is a recording medium which is readable by the computer ex111 or the like. Furthermore, a cell phone with a camera ex115 may transmit the moving picture data. This moving picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream delivery of the content data to the clients at their requests. The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each apparatus in this system performs coding or decoding, the picture coding apparatus or the picture decoding apparatus shown in the above-mentioned embodiments can be used.

The following describes the case of using a cell phone is taken as an example.

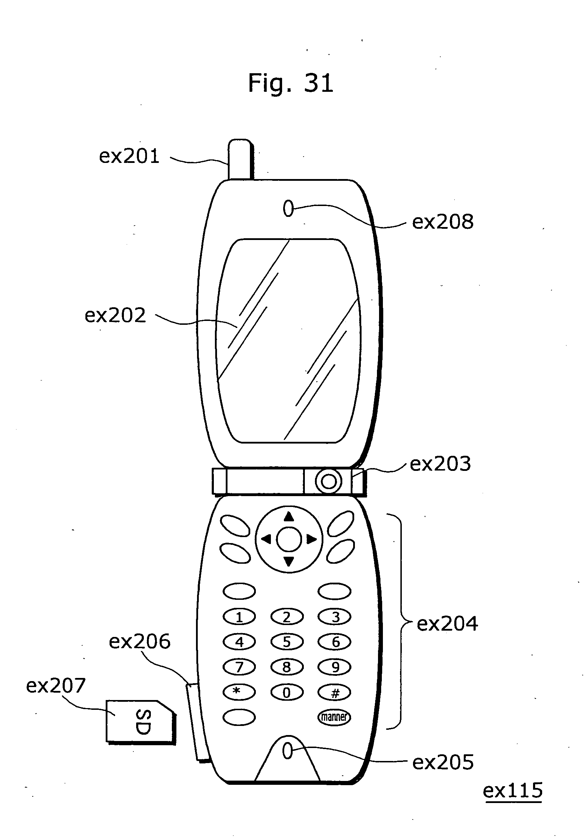

FIG. 31 is a diagram showing the cell phone ex115 using the picture coding method explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, an audio output unit ex208 such as a speaker for outputting audio, an audio input unit ex205 such as a microphone for inputting audio, a recording medium ex207 for recording coded or decoded data such as data of moving or still pictures shot by the camera, data of received e-mails and that of moving or still pictures, and a slot unit ex206 for attaching the recording medium ex207 to the cell phone ex115. The recording medium ex207 stores in itself a flash memory element, a kind of Electrically Erasable and Programmable Read Only Memory (EEPROM) that is a nonvolatile memory electrically erasable from and rewritable to a plastic case such as an SD card.

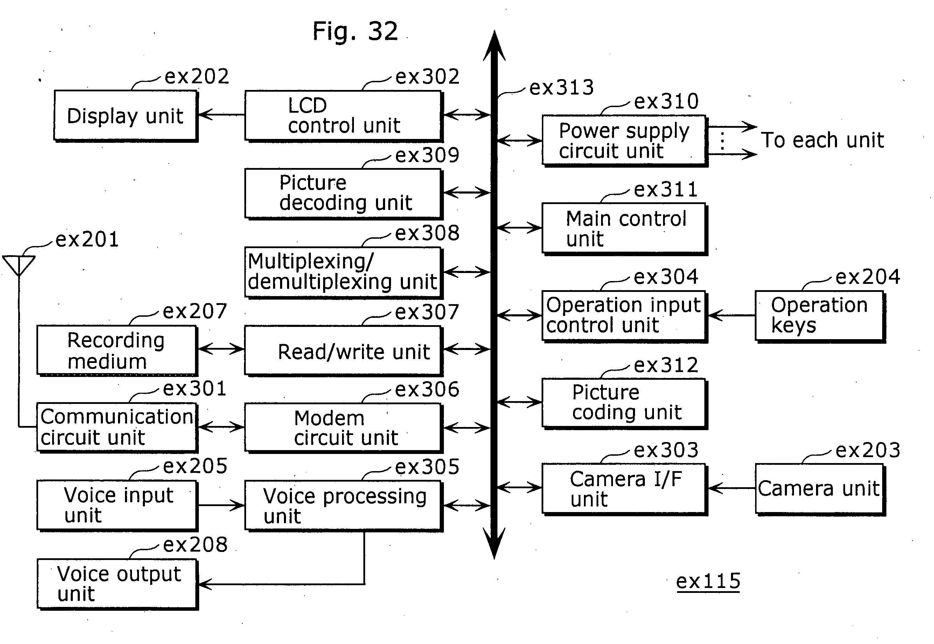

Next, the cell phone ex115 will be explained with reference to FIG. 32. In the cell phone ex115, a main control unit ex311, designed in order to control overall each unit of the main body which contains the display unit ex202 as well as the operation keys ex204, is connected mutually to a power supply circuit unit ex310, an operation input control unit ex304, a picture coding unit ex312, a camera interface unit ex303, a Liquid Crystal Display (LCD) control unit ex302, a picture decoding unit ex309, a multiplexing/demultiplexing unit ex308, a read/write unit ex307, a modem circuit unit ex306 and an audio processing unit ex305 via a synchronous bus ex313.

When a call-end key or a power key is turned ON by a user's operation, the power supply circuit unit ex310 supplies the respective units with power from a battery pack so as to activate the digital cell phone with a camera ex115 as a ready state.

In the cell phone ex115, the audio processing unit ex305 converts the audio signals received by the audio input unit ex205 in conversation mode into digital audio data under the control of the main control unit ex311 including a CPU, ROM and RAM, the modem circuit unit ex306 performs spread spectrum processing for the digital audio data, and the communication circuit unit ex301 performs digital-to-analog conversion and frequency conversion for the data, so as to transmit it via the antenna ex201. Also, in the cell phone ex115, the communication circuit unit ex301 amplifies the data received by the antenna ex201 in conversation mode and performs frequency conversion and the analog-to-digital conversion to the data, the modem circuit unit ex306 performs inverse spread spectrum processing of the data, and the audio processing unit ex305 converts it into analog audio data so as to output it via the audio output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs the digital-to-analog conversion and the frequency conversion for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the picture coding apparatus as described for the present invention, compresses and codes the picture data supplied from the camera unit ex203 using the coding method employed by the picture coding apparatus as shown in the embodiments mentioned above so as to transform it into coded image data, and sends it out to the multiplexing/demultiplexing unit ex308. At this time, the cell phone ex115 sends out the audio received by the audio input unit ex205 during the shooting with the camera unit ex203 to the multiplexing/demultiplexing unit ex308 as digital audio data via the audio processing unit ex305.

The multiplexing/demultiplexing unit ex308 multiplexes the coded image data supplied from the picture coding unit ex312 and the audio data supplied from the audio processing unit ex305, using a predetermined method, then the modem circuit unit ex306 performs spread spectrum processing of the multiplexed data obtained as a result of the multiplexing, and lastly the communication circuit unit ex301 performs digital-to-analog conversion and frequency transform of the data for the transmission via the antenna ex201.

As for receiving data of a moving picture file which is linked to a Web page or the like in data communication mode, the modem circuit unit ex306 performs inverse spread spectrum processing for the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 demultiplexes the multiplexed data into a bit stream of image data and that of audio data, and supplies the coded image data to the picture decoding unit ex309 and the audio data to the audio processing unit ex305, respectively via the synchronous bus ex313.

Next, the picture decoding unit ex309, including the picture decoding apparatus as described for the present invention, decodes the bit stream of the image data using the decoding method corresponding to the coding method as shown in the above-mentioned embodiments to generate reproduced moving picture data, and supplies this data to the display unit ex202 via the LCD control unit ex302, and thus the image data included in the moving picture file linked to a Web page, for instance, is displayed. At the same time, the audio processing unit ex305 converts the audio data into analog audio data, and supplies this data to the audio output unit ex208, and thus the audio data included in the moving picture file linked to a Web page, for instance, is reproduced.

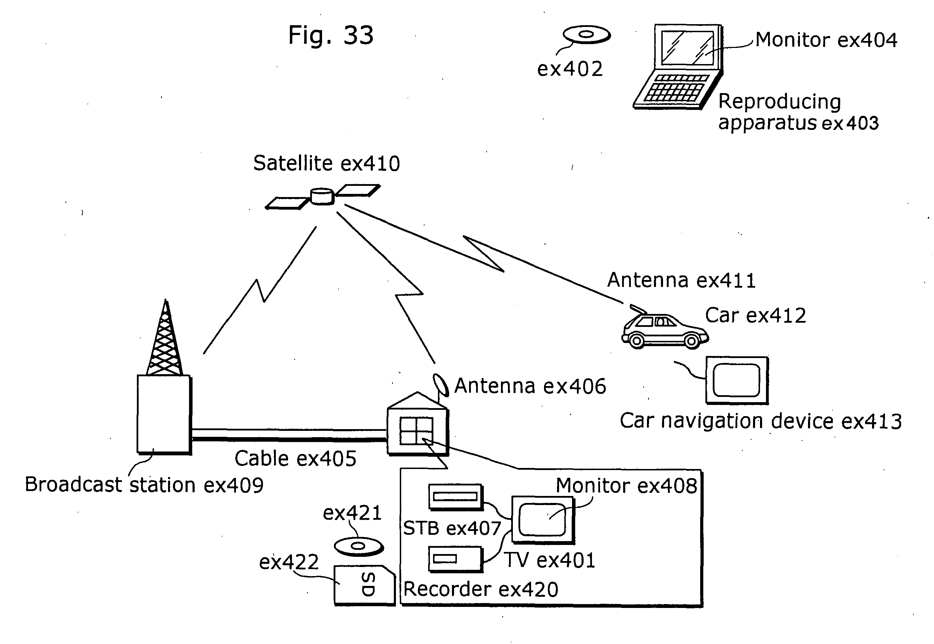

The present invention is not limited to the above-mentioned system since ground-based or satellite digital broadcasting has been in the news lately and at least either the picture coding apparatus or the picture decoding apparatus described in the above-mentioned embodiments can be incorporated into a digital broadcasting system as shown in FIG. 33. More specifically, a bit stream of video information is transmitted from a broadcast station ex409 to or communicated with a broadcast satellite ex410 via radio waves. Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes a coded bit stream for reproduction. The picture decoding apparatus as shown in the above-mentioned embodiments can be implemented in the reproducing apparatus ex403 for reading out and decoding the bit stream recorded on a recording medium ex402 such as a CD and a DVD. In this case, the reproduced moving picture signals are displayed on a monitor ex404. It is also conceivable to implement the picture decoding apparatus in the STB ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for replaying moving picture on a display device such as a car navigation system ex413 set in the car ex412.

Furthermore, the picture coding apparatus as shown in the above-mentioned embodiments can code picture signals and record them on the recording medium. As a concrete example, a recorder ex420 such as a DVD recorder for recording picture signals on a DVD disk ex421, a disk recorder for recording them on a hard disk can be cited. They can be recorded on an SD card ex422. When the recorder ex420 includes the picture decoding apparatus as shown in the above-mentioned embodiments, the picture signals recorded on the DVD disk ex421 or the SD card ex422 can be reproduced for display on the monitor ex408.

As for the structure of the car navigation system ex413, the structure without the camera unit ex203, the camera interface unit ex303 and the picture coding unit ex312, out of the components shown in FIG. 32, is conceivable. The same applies for the computer ex111, the television (receiver) ex401 and others.

In addition, three types of implementations can be conceived for a terminal such as the cell phone ex114: a sending/receiving terminal implemented with both an encoder and a decoder, a sending terminal implemented with an encoder only, and a receiving terminal implemented with a decoder only.

As described above, it is possible to use the picture coding method described in the above-mentioned embodiments for any of the above-mentioned apparatuses and systems, and by thus doing, the effects described in the above-mentioned embodiments can be obtained.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

### Industrial Applicability

The picture coding method according to the present invention realizes the generation of a coded picture signal on which rapid random access can be performed without reducing the compression rate, and is practical as a picture coding apparatus such as a video camera and a cell phone with a recording function.

## Claims

1. A picture coding method of coding a plurality of pictures included in a picture signal for generating a coded picture signal in the following manner: coding each of predetermined pictures as an entry picture without reference to another picture; and coding each of the pictures other than the entry pictures with reference to another coded picture,
wherein the picture signal is processed per access unit which is made up of a plurality of pictures including the entry picture, and
the method comprises:
a first reference restriction step of restricting, in a target access unit to be processed, so that a post-entry picture located after the entry picture in display order refers to another picture except for the following pictures: a picture located before the entry picture in coding order; and a pre-entry picture which is located before the entry picture in display order and refers to a picture located before the entry picture in coding order; and
a second reference restriction step of restricting, in an access unit immediately following the target access unit, so that a pre-entry picture located before the entry picture in display order refers to another picture except for the following pictures: a picture located before the entry picture in the target access unit in coding order; and a pre-entry picture in the target access unit, which refers to a picture located before the entry picture in the first access unit in coding order.

2. The picture coding method according to Claim 1,
wherein in the first reference restriction step, another picture is used for reference except for the following pictures: a picture located before the entry picture in coding order; and a pre-entry picture located before the entry picture in display order, and
in the second reference restriction step, another picture is used for reference except for the following pictures: a picture located before the entry picture in the target access unit in coding order; and a pre-entry picture in the target access unit.

3. The picture coding method according to Claim 2, further comprising
a selection step of selecting the target access unit.

4. The picture coding method according to Claim 3, further comprising:
a reference structure information coding step of coding reference structure information indicating an access unit processed as a target access unit for which the first and second reference restriction steps have been executed; and
an insertion step of inserting the coded reference structure information into the coded picture signal.

5. The picture coding method according to Claim 3, further comprising:
a reference structure information coding step of coding, per access unit, each reference structure information indicating whether or not the first and second reference restriction steps have been executed for each access unit processed as a target access unit; and
an insertion step of inserting each reference structure information corresponding to each access unit into said each access unit included in the coded picture signal.

6. The picture coding method according to Claim 3, further comprising:
a reference structure information generation step of generating each reference structure information indicating whether or not the first and second reference restriction steps have been executed for each access unit processed as a target access unit; and
a reference structure information output step of outputting the reference structure information generated in the reference structure information generation step, by attaching the generated information to the coded picture signal.

7. The picture coding method according to Claim6, further comprising
a coding/insertion step of coding each identification information for identifying each reference structure information corresponding to each access unit, and inserting said identification information into said each access unit included in the coded picture signal.

8. The picture coding method according to Claim 3, further comprising:
a reference structure information coding step of coding, per access unit, each reference structure information indicating a range of reference for each picture included in each access unit; and
an insertion step of inserting each reference structure information corresponding to each access unit into said each access unit included in the coded picture signal.

9. The picture coding method according to Claim 3, further comprising:
a reference structure coding step of coding, per access unit, each reference structure information indicating a range of reference for each post-entry picture included in each access unit, and a range of reference for each pre-entry picture included in an access unit immediately following said each access unit; and
an insertion step of inserting said reference structure information corresponding to each access unit into said each access unit included in the coded picture signal.

10. A coded picture signal generated using a picture coding method of coding a plurality of pictures included in a picture signal in the following manner: coding each of predetermined pictures as an entry picture without reference to another picture; and coding each of the pictures other than the entry pictures with reference to another coded picture,
wherein the picture coding method comprises:
a first reference restriction step of restricting, in a target access unit to be processed, so that a post-entry picture located after the entry picture in display order refers to another picture except for the following pictures: a picture located before the entry picture in coding order; and a pre-entry picture which is located before the entry picture in display order and refers to a picture located before the entry picture in coding order; and
a second reference restriction step of restricting, in an access unit immediately following the target access unit, so that a pre-entry picture located before the entry picture in display order refers to another picture except for the following pictures: a picture located before the entry picture in the target access unit in coding order; and a pre-entry picture included in the target access unit, which refers to a picture located before the entry picture in the target access unit in coding order.

11. The coded picture signal according to Claim 10,
wherein the coded picture signal includes reference structure information indicating an access unit processed as a target access unit for which the first and second reference restriction steps have been executed.

12. The coded picture signal according to Claim 10,
wherein the coded picture signal includes, in each access unit, reference structure information indicating whether or not the first and second reference restriction steps have been executed for each access unit processed as a target access unit.

13. The coded picture signal according to Claim 10,
wherein the coded picture signal includes, in each access unit, identification information for identifying each reference structure information indicating whether or not the first and second reference restriction steps have been executed for each access unit processed as a target access unit.

14. The coded picture signal according to Claim 10,
wherein the coded picture signal includes, in each access unit, reference structure information indicating a range of reference for each picture included in said each access unit.

15. The coded picture signal according to Claim 10,
wherein the coded picture signal includes, in each access unit, reference structure information indicating a range of reference for each post-entry picture included in said each access unit and a range of reference for each pre-entry picture included in an access unit immediately following said each access unit.

16. A program for coding a plurality of pictures included in a picture signal for generating a coded picture signal in the following manner: coding each of predetermined pictures as an entry picture without reference to another picture; and coding each of the pictures other than the entry pictures with reference to another coded picture,
wherein the picture signal is processed per access unit which is made up of a plurality of pictures including the entry picture, and
the program causes a computer to execute the following:
a first reference restriction step of restricting, in a target access unit to be processed, so that a post-entry picture located after the entry picture in display order refers to another picture except for the following pictures: a picture located before the entry picture in coding order; and a pre-entry picture which is located before the entry picture in display order and refers to a picture located before the entry picture in coding order; and
a second reference restriction step of restricting, in an access unit immediately following the target access unit, so that a pre-entry picture located before the entry picture in display order refers to another picture except for the following pictures: a picture located before the entry picture in the target access unit in coding order; and a pre-entry picture included in the target access unit, which refers to a picture located before the entry picture in the target access unit in coding order.

17. A recording medium storing a program for coding a plurality of pictures included in a picture signal for generating a coded picture signal in the following manner: coding each of predetermined pictures as an entry picture without reference to another picture; and coding each of the pictures other than the entry pictures with reference to another coded picture,
wherein in the program, the picture signal is processed per access unit which is made up of a plurality of pictures including the entry picture, and
the recording medium causes a computer to execute the following:
a first reference restriction step of restricting, in a target access unit to be processed, so that a post-entry picture located after the entry picture in display order refers to another picture except for the following pictures: a picture located before the entry picture in coding order; and a pre-entry picture which is located before the entry picture in display order and refers to a picture located before the entry picture in coding order; and
a second reference restriction step of restricting, in an access unit immediately following the target access unit, so that a pre-entry picture located before the entry picture in display order refers to another picture except for the following pictures: a picture located before the entry picture in the target access unit in coding order; and a pre-entry picture included in the target access unit, which refers to a picture located before the entry picture in the target access unit in coding order.

18. A picture coding apparatus for coding a plurality of pictures included in a picture signal for generating a coded picture signal in the following manner: coding each of predetermined pictures as an entry picture without reference to another picture; and coding each of the pictures other than the entry pictures with reference to another coded picture,
wherein the picture signal is processed per access unit which is made up of a plurality of pictures including the entry picture, and
the apparatus comprises:
a first reference restriction unit operable to restrict, in a target access unit to be processed, so that a post-entry picture located after the entry picture in display order refers to another picture except for the following pictures: a picture located before the entry picture in coding order; and a pre-entry picture which is located before the entry picture in display order and refers to a picture located before the entry picture in coding order; and
a second reference restriction unit operable to restrict, in an access unit immediately following the target access unit, so that a pre-entry picture located before the entry picture in display order refers to another picture except for the following pictures: a picture located before the entry picture in the target access unit in coding order; and a pre-entry picture included in the target access unit, which refers to a picture located before the entry picture in the target access unit in coding order.

19. The picture coding apparatus according to Claim 18,
wherein the first reference restriction unit refers to another picture except for the following pictures: a picture located before the entry picture in coding order; and a pre-entry picture located before the entry picture in display order, and
the second reference restriction unit refers to another picture except for the following pictures: a picture located before the entry picture in the target access unit in coding order; and a pre-entry picture in the target access unit.
